# EUROPEAN PATENT APPLICATION

(11) **EP 4 723 407 A1**
(43) Date of publication of application: **08.04.2026**
(21) Application number: 25207330.9
(22) Date of filing: 07.10.2025
(51) Int. Cl.: H02G 3/32, F16L 3/10, F16L 3/13

(54) **MULTI-DIAMETER CABLE CLIP**

(30) Priority: 07.10.2024 US 202463704297 P
(71) Applicant: Erico International Corporation, Solon, OH 44139 (US)
(72) Inventor: Young, Dennis R., Amherst, 44001 (US)
(74) Representative: Barker Brettell LLP

(57) **Abstract**

A bracket (900) may include an attachment portion (904) and a support clip (920). The attachment portion may define an attachment channel (954) configured to receive a building structure (902) to secure the bracket to the building structure The support clip may extend integrally from the attachment portion and may integrally include an outer arm (928) and an inner arm (940). The outer arm may extend from the attachment portion to define a support channel having a support width (951) to receive and resiliently support cable or conduit of a first diameter. The inner arm may integrally extend from the distal end of the outer arm, at least partly across the support channel, to define a reduced support width (952) of the support channel, smaller than the support width, to receive and resiliently support cable or conduit of a second diameter that is smaller than the first diameter.

## Description

### CROSS-REFERENCE TO RELATED APPLICATIONS

This application claims priority to U.S. Provisional Application No. 63/704,297, filed on October 7, 2024.

### BACKGROUND

In many applications, it may be useful to secure a conduit or cable relative to other structures. For example, some electrical codes can require conduit or cable to be secured to building structure within a certain height above an electrical box or with various other spacings.

### SUMMARY

Some examples of the disclosure provide a bracket to support cable or conduit. The bracket may include an attachment portion that may define an attachment channel to receive a building structure to secure the bracket to the building structure and a support clip that may integrally extend from the attachment portion. The support clip may include an outer arm and an inner arm. The outer arm may extend at a proximal end from the attachment portion to define a support channel to receive and support cable or conduit of a first diameter. The inner arm may integrally extend from a distal end of the outer arm in the support channel to define a reduced width of the support channel to receive and support cable or conduit of a second diameter. The second diameter may be smaller than the first diameter.

In some examples, the inner arm may be cantilevered from the outer arm to extend into the support channel. In some examples, the inner arm may be a first inner arm. The support clip may further include a second inner arm that may integrally extend from the distal end of the outer arm into the support channel, with the second inner arm cantilevered from the outer arm. In some examples, the inner arm may extend along a first outer lateral edge of the outer arm. The second inner arm may extend along a second outer lateral edge of the outer arm, opposite the first outer lateral edge. In some examples, the support clip may further include a finger that extends into the support channel opposite the inner arm to define a further reduced width of the support channel, to receive and support the cable or conduit of the second diameter.

In some examples, the attachment portion may include engagement interfaces that extend into the attachment channel to be aligned to resiliently contact the building structure within the attachment channel. In some examples, the attachment portion may include an intermediate arm, an attachment interface integrally formed with the intermediate arm, and an attachment arm integrally formed with the attachment interface. The engagement interfaces may be integrally formed on one or more of the intermediate arm or the attachment arm. In some examples, the engagement interfaces may be integrally formed on an engagement finger that extends integrally from the attachment arm into the attachment channel.

Some examples of the disclosure provide a method of supporting cable or conduit. The method may include attaching a bracket to a building structure, with the building structure received into an attachment channel of an attachment portion of the bracket to support a support clip of the bracket relative to the building structure, and selectively inserting cable or conduit into a support channel defined within the support clip. Selectively inserting the cable or conduit into the support channel to selectively one or more of support a first cable or conduit of a first diameter in the support channel, with the first cable or conduit secured by an outer arm of the support channel, or support a second cable or conduit of a second diameter in the support channel, the second diameter being smaller than the first diameter, with the second cable or conduit secured by an inner arm that integrally extends from the outer arm into the support channel.

Some examples of the disclosure provide a bracket to support a cable or conduit. The bracket may include an attachment portion that defines an attachment channel configured to receive a building structure to secure the bracket to the building structure and a support clip that extends integrally from the attachment portion. The support clip integrally includes an outer arm and an inner arm. The outer arm may extend from a proximal end integral with the attachment portion, to a distal end, to define a support channel having a support width to receive and resiliently support cable or conduit of a first diameter. The inner arm may integrally extend from the distal end of the outer arm, at least partly across the support channel, to define a reduced support width of the support channel, smaller than the support width, to receive and resiliently support cable or conduit of a second diameter that is smaller than the first diameter.

In some examples, the inner arm may be cantilevered from the outer arm to extend at least partly across the support channel to a distal end of the inner arm. In some examples, the inner arm may extend into the support channel.

In some examples, inner arm may connect to the outer arm at a spring portion of the inner arm that includes a first bend connected to the outer arm and a second bend extending from the first bend toward the distal end of the inner arm. In some examples, the first bend may curve oppositely to the second bend. In some examples, the first bend may be concave relative to the attachment portion and the second bend is convex relative to the attachment portion. In some examples, between the second bend and the distal end of the inner arm, the inner arm may be concave relative to the attachment portion.

In some examples, the inner arm may be a first inner arm and the support clip may further include a second inner arm that integrally extends from the distal end of the outer arm, at least partly across the support channel. The first and second inner arms may be cantilevered from the outer arm. In some examples, the support channel may define an axial direction relative to the cable or conduit, and the support clip may define a lateral direction substantially parallel to the axial direction. The first inner arm may extend along a first lateral side of the outer arm. The second inner arm may extend along a second lateral side of the outer arm, laterally opposite from the first lateral side. In some examples, the first and second arms may define laterally outer edges of the support clip.

In some examples, the support clip further may further include a finger that extends into the support channel from an opposite side of the support channel as the inner arm and further defines the reduced support width of the support channel, to receive and resiliently support the cable or conduit of the second diameter.

In some examples, the attachment portion may include an intermediate arm that integrally extends from the outer arm, an attachment interface integrally extending from the intermediate arm, and an attachment arm integrally extending from the attachment interface. The intermediate arm, the attachment interface, and the attachment arm may collectively define the attachment channel. In some examples, the attachment portion may include engagement interfaces integrally formed on one or more of the intermediate arm or the attachment arm. The engagement interfaces may extend into the attachment channel to be aligned to resiliently secure the building structure within the attachment channel and being optionally or preferably integrally formed on an elongate engagement finger that extends integrally from the attachment arm into the attachment channel.

Some examples of the disclosure provide a method of supporting cable or conduit. The method may include attaching a bracket to a building structure, with the building structure received into an attachment channel of an attachment portion of the bracket to support a support clip of the bracket relative to the building structure and selectively inserting cable or conduit into a support channel defined within the support clip. Selectively inserting cable or conduit into a support channel defined within the support clip may selectively support a first cable or conduit of a first diameter in the support channel, with the first cable or conduit resiliently secured by an outer arm of the support channel or support a second cable or conduit of a second diameter in the support channel, the second diameter being smaller than the first diameter, with the second cable or conduit resiliently secured by an inner arm that integrally extends from the outer arm into the support channel.

In some examples, inserting the first cable or conduit into the support channel to be secured by the outer arm may deflect the inner arm through the outer arm to extend outside of the support channel.

Some examples of the disclosure provide a method of supporting cable or conduit. The method may include providing a bracket that includes an attachment portion that defines an attachment channel and a support clip that extends integrally from the attachment portion, attaching the bracket to a building structure, with the building structure received into an attachment channel of the attachment portion to support the support clip relative to the building structure, and selectively inserting cable or conduit into a support channel defined within the support clip. Selectively inserting cable or conduit into a support channel defined within the support clip may selectively support a first cable or conduit of a first diameter in the support channel, with the first cable or conduit resiliently secured by an outer arm of the support channel or support a second cable or conduit of a second diameter in the support channel, the second diameter being smaller than the first diameter, with the second cable or conduit resiliently secured by an inner arm that integrally extends from the outer arm into the support channel.

Aspects and embodiments of the invention are defined in the claims. Feature(s) of the aspects/embodiments of the invention or features otherwise disclosed herein may be used separately, together and/or be interchangeable wherever possible. Where features are, for brevity, described in the context of a single embodiment, those features may also be provided separately or in any suitable sub-combination. Features described in connection with the bracket or any feature(s) or component(s) described may have corresponding features definable and/or combinable with respect to a method or vice versa, and these embodiments are specifically envisaged.

### BRIEF DESCRIPTION OF THE DRAWINGS

The accompanying drawings, which are incorporated in and form a part of this specification, illustrate examples of the disclosure and, together with the description, serve to explain the principles of examples of the disclosure:
FIGS. 1A and 1B ("FIGS. 1") are axonometric and side elevational views of a bracket to support cable or conduit according to an example of the disclosed technology;
FIGS. 2A-2D ("FIGS. 2") illustrate isometric and side elevational views of the bracket of FIGS. 1 supporting cable of first and second sizes;
FIGS. 3A and 3B ("FIGS. 3") illustrate isometric and side elevational views of another example of a bracket to support cable or conduit according to an example of the disclosed technology;
FIGS. 4A-4D ("FIGS. 4") illustrate isometric and side elevational views of the bracket of FIGS. 3 supporting cable of first and second sizes;
FIGS. 5A-5C ("FIGS. 5") illustrate isometric, detail, and side elevational views of yet another example of a bracket to support cable or conduit according to an example of the disclosed technology;
FIGS. 6A and 6B ("FIGS. 6") illustrate isometric and side elevational views of still another example of a bracket to support cable or conduit according to an example of the disclosed technology;

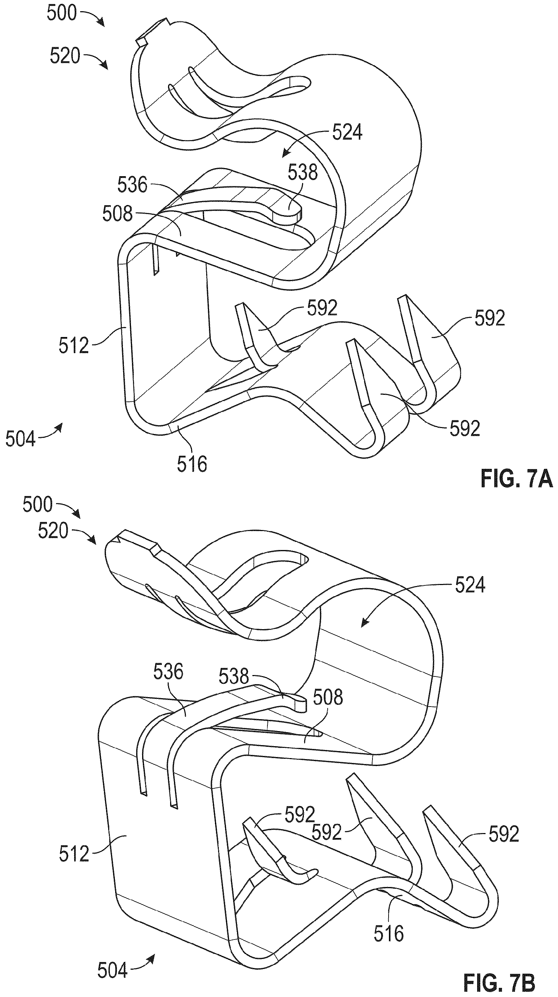

FIGS. 7A and 7B ("FIGS. 7") illustrate isometric and side elevational views of yet another example of a bracket to support cable or conduit according to an example of the disclosed technology;
FIGS. 8A and 8B ("FIGS. 8") illustrate partial side elevational views of brackets to support cable or conduit according to examples of the disclosed technology;
FIGS. 9A and 9B ("FIGS. 9") illustrate isometric and side elevational views of yet another example of a bracket to support cable or conduit according to an example of the disclosed technology;
FIGS. 10A and 10B ("FIGS. 10") illustrate isometric and side elevational views of yet another example of a bracket to support cable or conduit according to an example of the disclosed technology;
FIGS. 11A and 11B ("FIGS. 11") illustrate isometric and side elevational views of yet another example of a bracket to support cable or conduit according to an example of the disclosed technology; and
FIGS. 12A and 12B ("FIGS. 12") illustrate isometric and side elevational views of yet another example of a bracket to support cable or conduit according to an example of the disclosed technology.

### DETAILED DESCRIPTION

Before any examples of the disclosure are explained in detail, it is to be understood that the disclosure is not limited in its application to the details of construction and the arrangement of components set forth in the following description or illustrated in the following drawings. The disclosure is capable of other examples and of being practiced or of being carried out in various ways.

The following discussion is presented to enable a person skilled in the art to make and use examples of the disclosure. Various modifications to the illustrated examples will be readily apparent to those skilled in the art, and the generic principles herein can be applied to other examples and applications without departing from examples of the disclosure. Thus, examples of the disclosure are not intended to be limited to embodiments shown, but are to be accorded the widest scope consistent with the principles and features disclosed herein. The following detailed description is to be read with reference to the figures, in which like elements in different figures have like reference numerals. The figures, which are not necessarily to scale, depict selected examples and are not intended to limit the scope of examples of the disclosure. Skilled artisans will recognize the examples provided herein have many useful alternatives and fall within the scope of examples of the disclosure.

As noted above, in some contexts, it may be useful to secure a conduit or cable relative to building structures. In some examples, correspondingly, a building-mounted bracket with a support clip can secure a conduit or cable to support the conduit or cable within a certain distance from an electrical box or with other spacing (e.g., at intervals along a support beam).

Conventional designs for support brackets can limit a user to only affixing conduit or cable of a single diameter, to support the conduit or cable relative to an electrical box (or otherwise). Brackets according to conventional designs may also be usable with only narrow ranges of sizes (or types) of building structures to support cable or conduit. There is accordingly a need for an improved devices to support multiple conduit or cable, or conduit or cable of various diameters for in-wall electrical applications, relative to a wide range of building structures.

Examples of the disclosed technology can address these or other issues by providing a bracket (e.g., snap clip, cable support clip, conduit support clip, clip, etc.) including a support clip configured to support conduit or cable multiple different diameters. In some examples, the bracket may be mounted to beams (e.g., structural beams, I-beams, etc.), studs, or other building structure by a corresponding attachment portion (e.g., formed as a resiliently deformable channel). In some examples, the bracket can be easily mounted using simple impact force. For example, some examples can be installed via manual impact(s) on hand tool (e.g., a rigid body with opposed impact-receiving and clip-holding ends) that can drive the clip into secure engagement with the flange (e.g., to be aligned to receive and support cable or conduit relative to the flange).

Some configurations can include a support clip with various arms or fingers to secure cable or conduit of different diameters, or multiple cable/conduit simultaneously (e.g., as secured to building structure with resilient attachment channel). In some examples, a support clip can include an outer arm that defines a support channel for cable or conduit of a first size, and can further include at least one inner arm (e.g., a central or outer arm) that can extend to support cable or conduit of a second, smaller size. For example, in some configurations, an inner arm can extend integrally from an outer arm into the corresponding attachment channel. Thus, in some cases, the inner arm or the outer arm can flex resiliently, as needed, to adaptably accommodate different sizes or numbers of cable or conduit. With such an arrangement, for example, an installer can use a single support clip to support a 6 mm-10 mm, 11-15 mm, or any other range of conduit or cable (e.g., for a home run and a metal clad (MC) or armored clad (AC) whip to an adjacent box or device). Further, in some cases, use of multiple inner arms can provide still further adaptability to a range of sizes of cable or conduit, or various other installation needs.

In some examples, an outer arm connects to an attachment portion (e.g., flange portion) of the bracket. The attachment portion can include an intermediate arm, an attachment interface, and an attachment arm. In some examples, the intermediate arm is connected with the outer arm. In other examples, the intermediate arm is integrally formed with the outer arm. In some examples the outer arm and intermediate arm define a first channel. In some examples, the intermediate arm, the attachment interface, and the attachment arm define a second channel.

In some examples, a support channel can resiliently deform receive and support a conduit or cable. For example, a support channel may receive a conduit via an insertion opening defined by an outer arm, and the outer arm may resiliently deflect to receive the conduit through the insertion opening and thereafter support (e.g., secure) the conduit within the support channel (e.g., once the conduit has been fully inserted through the insertion opening).

As also noted above, in some examples, a bracket can include a resilient inner arm (e.g., a central or edge arm). For example, an inner arm may extend from an outer arm of a support clip into a support passage of the clip to help grip cable or conduit of relatively small diameters (e.g., MC or AC cable). For example, one or more edge or central inner arm can resiliently flex by varying degrees, relative to the corresponding outer arm, to hold different diameters of conduit or cable. In some examples, an inner arm can be attached to a distal end of an outer arm (e.g., opposite the support channel from an attachment portion of the relevant clip). Such an arrangement, for example, can allow for easier installation and removal of the conduit or cable. In other examples, a bracket may include an inner arm that extends from a distal end of the outer arm, and another inner arm (e.g., central finger) that extends at a proximal end of the outer arm.

In some examples, an attachment channel of an attachment portion can receive a flange or other building structure to secure the corresponding bracket in place. For example, an attachment channel may resiliently deform to receive a flange or other building structure via an attachment opening. The attachment portion may then resiliently return to secure the bracket to the building structure (e.g., once the flange has been fully inserted through the flange opening).

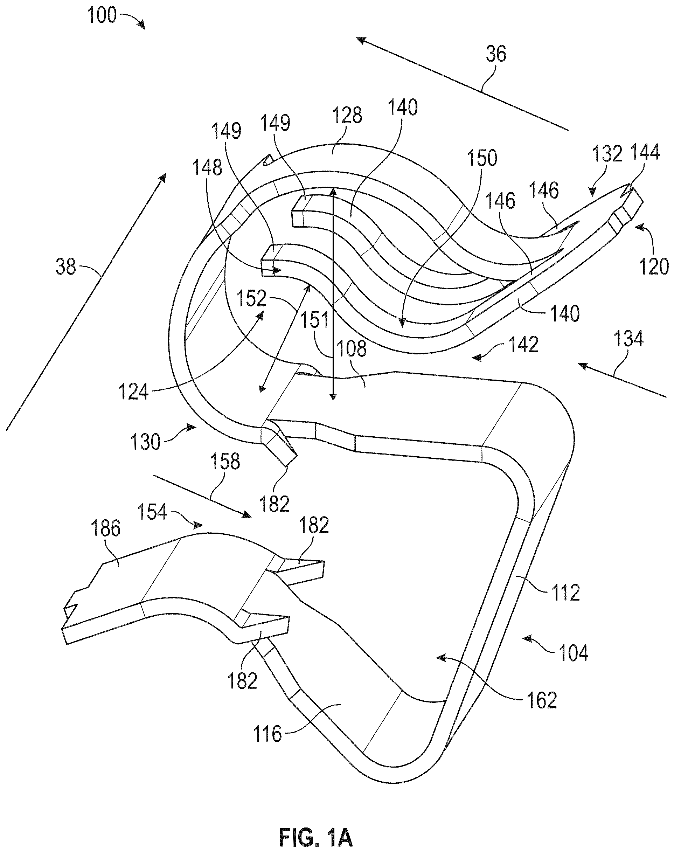

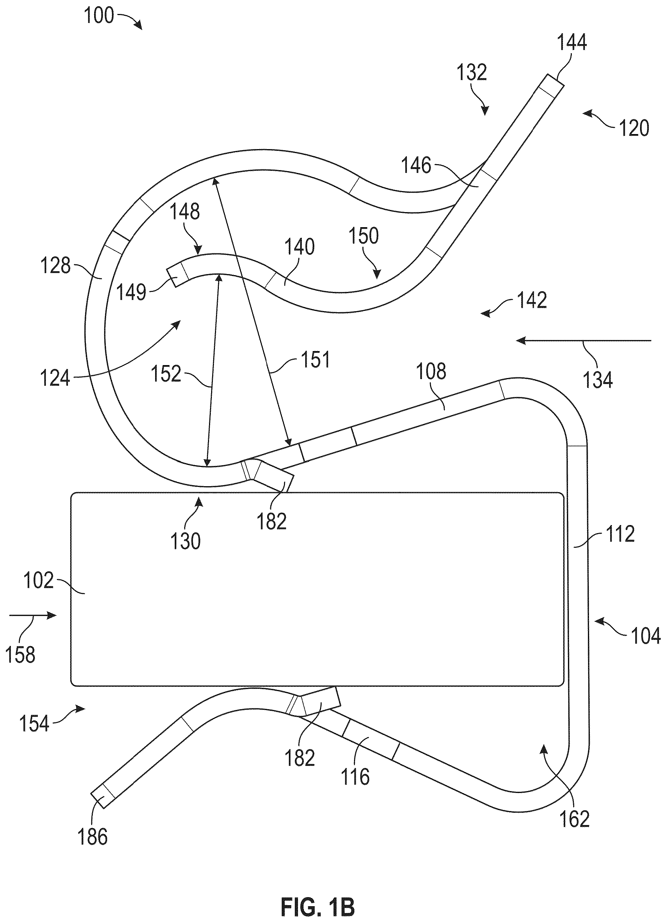

FIGS. 1A and 1B illustrate an example bracket 100 (e.g., clip) to support cable or conduit relative to an electrical component (not shown) according to an example of the disclosure. In the illustrated example, the bracket 100 includes an attachment portion 104 configured to be secured to a building structure 102. In some examples, the building structure 102 is a structural beam. In other examples, the building structure 102 is a stud of a building, an I-beam, or any other building structure. Further, although the bracket 100 is shown and discussed as secured to a structural beam herein in particular, some examples may be configured for attachment to other structures.

The attachment portion 104 can include an intermediate arm 108, an attachment interface 112, and an attachment arm 116. In some examples, and as shown, the attachment interface 112 integrally extends from the attachment arm 116, and the intermediate arm 108 integrally extends from the attachment interface 112. In other examples, the intermediate arm 108 integrally extends from the attachment interface 112 and the attachment arm 116 integrally extends from the attachment interface 112.

A support clip 120 extends integrally from the attachment portion 104 to define a first channel 124 (i.e., generally, a support channel, extending along an axial direction corresponding to received cable or conduit). The support clip 120 can include an outer arm 128 that extends integrally from the attachment portion 104. Specifically, the outer arm 128 extends integrally from the intermediate arm 108 at a proximal end 130 and extends to a distal end 132, relative to the attachment portion 104. In some examples, the outer arm 128 may extend at the proximal end 130 integrally from the intermediate arm 108. In some example, the outer arm 128 may form a general C-shape relative to the first channel 124. In other examples, the outer arm 128 may form a general circle relative to the first channel 124. In some examples, the outer arm 128 may be generally concave relative to the first channel 124.

The outer arm 128 may be a radially outer arm relative to an inner arm (and a common reference axis through the first channel 124). In some examples, the outer arm 128 may be radially outer arms relative to the first channel 124. In other examples, the outer arm 128 may be a laterally outer arm relative to a lateral direction, where the lateral direction is defined to extend substantially parallel to an axial direction of a cable or conduit through the first channel 124.

The outer arm 128 and intermediate arm 108 may define a cable or conduit insertion direction, or a first insertion direction 134. Conduit or cable may be inserted in the first insertion direction 134 via a first insertion opening 142. The first insertion direction 134 may be substantially parallel to an elongate direction 36 of the bracket 100 or of a cross section of a relevant building structure (e.g., the building structure 102 as shown in FIG. 1B). In some examples, the elongate direction 36 may be a direction that extends substantially perpendicular to an axial direction of the first channel 124.

Correspondingly, as generally noted above, the bracket 100 also defines a lateral direction 38. In some examples, the lateral direction 38 is substantially perpendicular to the elongate direction 36. In some examples, the elongate direction 36 is substantially parallel to an axial direction of the first channel 124. As used herein, in the context of a clip that includes a channel to receive cable or conduit, the term "lateral" (e.g., laterally) defines a direction that is substantially parallel to an axial direction of the channel (and cable or conduit received therein).

The outer arm 128 also supports an at least one inner arm 140 (e.g., two arms 140, as shown) to accommodate (i.e., receive, and resiliently support and secure) smaller sizes of a cable or conduit. In particular, the inner arm(s) 140 may extend across the support channel 124, so as to be aligned to engage cable that is within (and smaller than) the support channel 124. For example, as shown, the inner arms 140 extend across the support channel 124 so as to partially block (or intercept) the support channel 124 as viewed in the axial direction, although the inner arms 140 may be space laterally from the portion of the outer arm 128 that defines the support channel 124.

Accordingly, for example, the outer arm 128 can engage and secure a larger size of cable or conduit within the first channel 124, and the inner arm(s) 140 can engage and secure a smaller size of cable or conduit within the first channel 124. Thus, the inner arm 140 allows for a smaller size of cable or conduit to be resiliently secured within the first channel 124, but can be resiliently deflected (e.g., out of the first channel 124) to accommodate a larger size of cable or conduit, as further discussed below.

In some examples, the inner arm 140 may be a radially inner arm relative to the outer arm 128. In some examples, the inner arm(s) 140 may be radially inner arms relative to the first channel 124.

In the example shown in FIGS. 1, the bracket 100 includes two inner arms 140. However, it should be contemplated that the bracket 100 may include one inner arm, as shown and discussed in greater detail below. In other examples, the bracket 100 may include more than two inner arms. In the example bracket 100 depicted in FIGS. 1, the inner arms 140 are laterally spaced apart from each other on the outer arm 128.

In some examples, a first inner arm 140 may be on a first lateral side of the outer arm 128 and a second inner arm 140 bay be on a second lateral side of the outer arm 128, opposite the first lateral side.

In the example shown, the inner arms 140 are integrally formed with the outer arm 128 at the distal end 132 of the outer arm 128. In some examples, the inner arms 140 may be integrally formed with the outer arm 128 at the proximal end 130 of the outer arm 128.

In some examples, the inner arms 140 are contoured to extend more radially inward than the outer arm 128, with respect to the first channel 124. In some examples, the inner arms 140 are axially spaced relative to the first channel 124 (e.g., laterally offset from the outer arm 128).

In some examples, the inner arms 140 may extend from a distal end of the outer arm 128 across the first channel 124. Specifically, a distal end 149 of the inner arms 140 may extend radially into alignment with the first channel 124, as also discussed above. In some examples, the distal end 149 may be an end opposite from which the inner arms 140 connect to the outer arm 128. In some examples, the distal end 149 may be an end of the inner arms 140 that is closest to the proximal end 130 of the outer arm 128.At the proximal end 130, the outer arm 128 may be concave relative to the first channel 124. As shown in FIGS. 1, the outer arm 128 is relatively concave along an elongate length of the outer arm 128. At the distal end 132, the outer arm 128 may be convex relative to the first channel 124. In other examples, the outer arm 128 may be convex at the distal end 132 relative to the first insertion direction 134.

At the distal end 132, the outer arm 128 may include an arm tab 144. In some examples, the arm tab 144 is integrally formed with the inner arms 140. In other examples, the arm tab 144 is integrally formed with the outer arm 128. In some examples, such as the example bracket 100, the arm tab 144 integrally connects the inner arms 140 to the outer arm 128. The arm tab 144 may allow the inner arms 140 to resiliently deflect when a conduit or cable is inserted and secured in the first channel 124, as described in greater detail below.

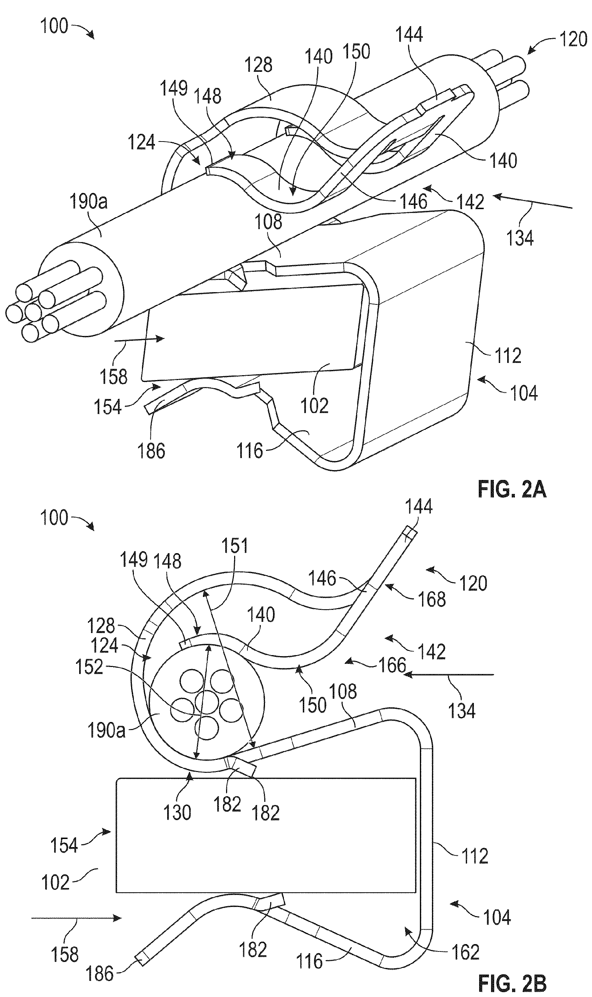

In some examples, the arm tab 144 or other distal configuration of the outer arm 128 can provide an entrance structure. For example, as shown in FIG. 2B, the outer arm 128 (and inner arms 140, as supported thereby) angle inward relative to the insertion direction 134, to define an entrance 166 into the channel 124 as well as an entrance structure 168 that extends wider than the entrance, transverse to an axial direction of the channel 124 and the insertion direction 134. Accordingly, for example, the entrance structure 168 may help both to guide installers in aligning and inserting cable or conduit and to allow the insertion of the cable or conduit to appropriately deflect the outer arm 128 without requiring excessive force

The inner arms 140 may include a concave curvature 148 (e.g., concave portion or bend) and a convex curvature 150 (e.g., convex portion or bend). In some examples, such as the non-limiting example of bracket 100, the concave curvature 148 of the inner arms 140 may be located at the distal end 149 of the inner arms 140 relative to the arm tab 144, and the convex curvature 150 may be located at a proximal end of the inner arms 140 relative to the arm tab 144. In other examples, the concave curvature 148 may be located at the proximal end of the inner arms 140 relative to the arm tab 144, and the convex curvature 150 may be located at the distal end 149 of the inner arms 140 relative to the arm tab 144.

In some examples, the concave curvature 148 may be concave relative to the first channel 124. In some examples, the concave curvature 148 may be convex relative to the outer arm 128. In some examples, the concave curvature 148 may be concave relative to the intermediate arm 108.

In some examples, the convex curvature 150 may be convex relative to the first channel 124. In some examples, the convex curvature 150 may be concave relative to the outer arm 128. In some examples, the convex curvature 150 may be convex relative to the intermediate arm 108.

The inner arms 140 may define a spring portion 146 of the bracket 100. Specifically, in some examples, the spring portion 146 is a portion of the inner arms 140 where the inner arms resiliently connect to the outer arm 128. In some examples, the spring portion 146 may include a first bend connected to the outer arm 128. In some examples, including as further discussed below, the spring portion 146 may include a second bend that extends from the first bend, toward the distal end of the inner arms 140 (e.g., to provide an s-curve or other similar spring profile). In some examples, such an s-shape of the spring portion 146 may allow the inner arms 140 to be flexible and also secure when a cable or conduit is secured within the bracket 100. Correspondingly, adjustment of curvature of the spring portion 146 (e.g., to provide a particular s-shape) can allow for a adaptable manufacture of the bracket 100 to accommodate a wide range of shape, size, etc. of supported components.

In some examples, the bracket 100 may define a support width 151 (e.g., a first support width). Specifically, the outer arm 128 may include the support width 151. In some examples, the support width 151 may extend from the intermediate arm 108 to the outer arm 128. In other examples, the support width 151 may be measured between the proximal end 130 of the outer arm 128 and a distal end 132 of the outer arm 128 (e.g., perpendicularly, from a center-point of support portion on the distal end 132 that is configured to engage with cable or conduit). In some examples, the support width 151 may be a width that extends perpendicular to the outer arm 128. Specifically, in some examples, the support width 151 may extend from an inflection portion of the outer arm 128 relative to the first channel 124. The support width 151 may include a maximum undeformed width of the first support channel 124, where the maximum undeformed width may be a maximum width of a cable or conduit that may be resiliently secured in the first channel 124 without resilient deformation of the outer arm 128.

Correspondingly, the bracket 100 may define a reduced support width 152 (e.g., a second support width). Specifically, the inner arms 140 may include the reduced support width 152 that may be generally smaller than the support width 151 (at least, with the inner and outer arms 140, 128 in a nondeflected position). In some examples, the reduced support width 152 may be measured between from the intermediate arm 108 and the inner arms 140. In some examples, the reduced support width 152 may be a width that extends perpendicular to portion of the distal end 149 that is configured to engage cable or conduit. Specifically, in some examples, the reduced support width 152 may extend from concave curvature 148 of the inner arms 140, relative to the first channel 124 (e.g., perpendicularly from a center-point of engagement with a cable or conduit). The reduced support width 152 may include a reduced maximum undeformed width of the first support channel 124, where the reduced maximum undeformed width may be a reduced maximum width of a cable or conduit that may be resiliently secured in the first channel 124 without resilient deformation of the inner arms 140.

The attachment portion 104 of the bracket 100 can be secured to building structure 102 via an attachment opening 154. Specifically, the bracket 100 can be secured to the building structure 102 by inserting the building structure 102 in a second insertion direction 158, and the building structure 102 is secured within a second channel 162 - generally, an attachment channel, extending along an axial direction corresponding to an elongate direction of the received building structure. In some examples, the second insertion direction 158 is parallel to the first insertion direction 134. In some examples, the attachment portion 104 can be snapped or otherwise seated onto the building structure 102. For example, the attachment portion 104 may resiliently deflect to secure the bracket 100 to the building structure 102 via movement of the bracket 100 in the elongate direction 36.

In some examples, the attachment portion 104 may include engagement interfaces 182 to secure the bracket 100 to the building structure 102. In the example bracket 100, the engagement interfaces 182 are integrally formed within the attachment portion 104. Specifically, in some examples, the intermediate arm 108 and the attachment arm 116 may both include engagement interfaces 182. In some examples, the attachment interface 112 may also include engagement interfaces 182. In other examples, the support clip 120 (e.g., the outer arm 128) may include engagement interfaces 182. In the example bracket 100, engagement interfaces 182 are integrally formed at a junction between the proximal end 130 of the outer arm 128 and the intermediate arm 108, as well as at an opposed convex curvature of the attachment arm 116. The engagement interfaces 182 may extend into the second channel 162 and contact the building structure 102, further securing the bracket 100 to the building structure.

Further, the attachment arm 116 may include an attachment tab 186 at a distal end of the attachment arm 116 relative to the attachment interface 112. In some examples, the attachment tab 186 may be resiliently deflected from the intermediate arm 108 to release the bracket 100 from the building structure 102 (or vice versa). The outwardly flared configuration of the attachment tab 186 can also help to guide alignment of the channel 162 with the relevant building structure during installation.

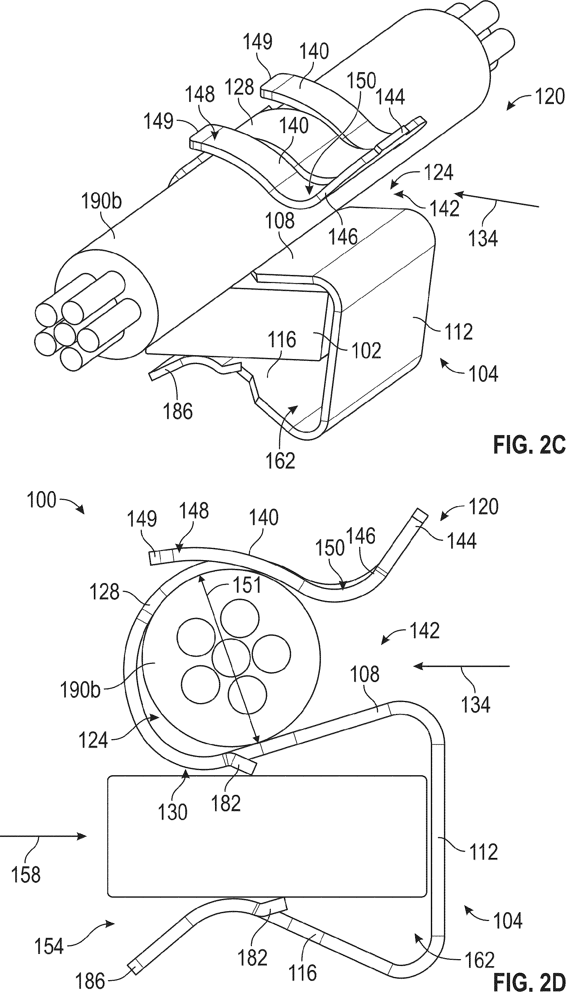

As discussed above, the inner arms 140 and outer arm 128 allow for various sizes of cable or conduit to be resilient secured within the first channel 124. For example, as shown in FIGS. 2A and 2B, a first size of a cable 190a (or similar conduit) may be secured within the first channel 124 and, as shown in FIGS. 2C and 2D, a second (larger) size of a cable 190b (or similar conduit) may be secured within the first channel 124 of the bracket 100. In some examples, the cable 190a has a diameter of 6 mm and the cable 190b has a diameter of 10 mm. In some examples, the bracket 100 may be configured to secure a cable or conduit with a diameter in a first range. In some examples, the bracket 100 may be configured to secure a cable or conduit with a diameter in a first range between 6 mm and 10 mm.

Turning now to FIGS. 2A and 2B, the cable 190a has been inserted into the first channel 124 of the bracket 100. Once inserted into the first channel 124 in the first insertion direction 134, the cable 190a may be resiliently pressed into the proximal end 130 of the outer arm 128 via the inner arms 140, securing the cable 190a within the support clip 120. In some examples, the cable 190a may be resiliently secured within the first channel 124 via the inner arms 140. Specifically, the cable 190a is engaged by concave curvature 148 of the inner arms 140 to resiliently secure the cable 190a within the first channel 124. In some examples, the cable 190a may be released from the first channel 124 by resiliently deflecting the arm tab 144 away from the attachment portion 104 to correspondingly deflect the inner arms 140 away from the cable 190a, so that the cable 190a may be removed from the support clip 120.

As noted above, the illustrated example configuration includes two of the inner arms 140. This configuration, for example, can provide distributed (e.g., spaced apart) contact regions between the inner arms 140 and a cable or conduit (e.g., as shown in FIG. 2A) with corresponding improvements to stability and security of engagement as compared to conventional designs. In particular, the inner arms 140 extend as cantilevered arms along opposed lateral sides of the bracket 100 (i.e., at opposite axial ends of the channel 124), to provide particularly secure resilient engagement of cable or conduit. Specifically, as shown, two of the inner arms 140 can extend from the outer arm 128 such that the inner arms 140 define lateral outer edges of the support clip 120. Thus, for example, the inner arms 140 can cooperate with an opposed side of the outer arm 128 to resiliently support the cable 190a with the inner arms 140 within the reduced support width 152 at three lateral-spaced contact areas (with the width 152 expanded to secure the cable 190a via resilient deflection of the inner arms 140 by insertion of the cable 190a). In other example, however, other configurations are possible.

Similarly, in FIGS. 2C and 2D, a cable 190b has been inserted into the first channel 124 of the bracket 100. The cable 190b has a larger diameter than the cable 190a, and thus, the cable 190b may be resiliently secured within the first channel 124 via the outer arm 128 within the support width 151 (with the support width 151 similarly expanded to secure the cable 190b via resilient deflection of the outer arm 128 by insertion of the cable 190b).

In some examples, the cable 190b, which has the larger diameter, is secured in the first channel 124 by the outer arm 128 by deflecting (i.e., resiliently bending) the inner arm 140 such that the inner arm 140 extends through the outer arm 128 to extend outside the support channel 124. In some examples, to secure a cable with a larger diameter, the inner arm 140 may be resiliently deflected beyond the reduced support width 152 to allow the cable to be secured within the support width 151. In examples where the inner arm 140 is resiliently deflected beyond the support width 151, the inner arm 140 may be resiliently deflected such that the inner arm 140 is radially spaced further from cable or conduit within the first channel 124 than is the outer arm 128.

In some examples, the cable 190b may be released from the support clip 120 by resiliently deflecting the arm tab 144. Resiliently deflecting the arm tab 144 may correspondingly deflect the outer arm 128 from the cable 190b, and the cable 190b may be removed from the first channel 124. In this regard, for example, the cable 190b may be primarily secured by engagement with the outer arm, although the inner arms 140 may also provide useful engagement in this arrangement.

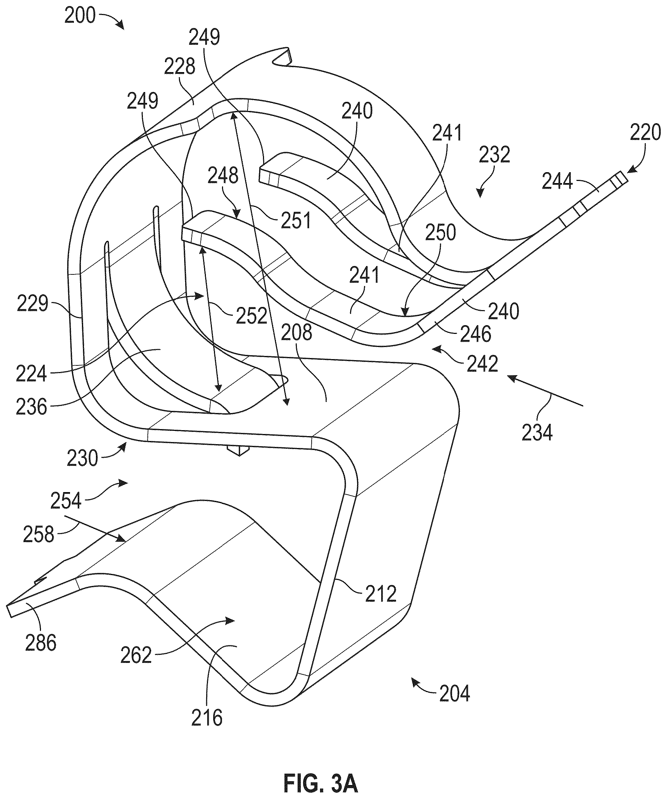

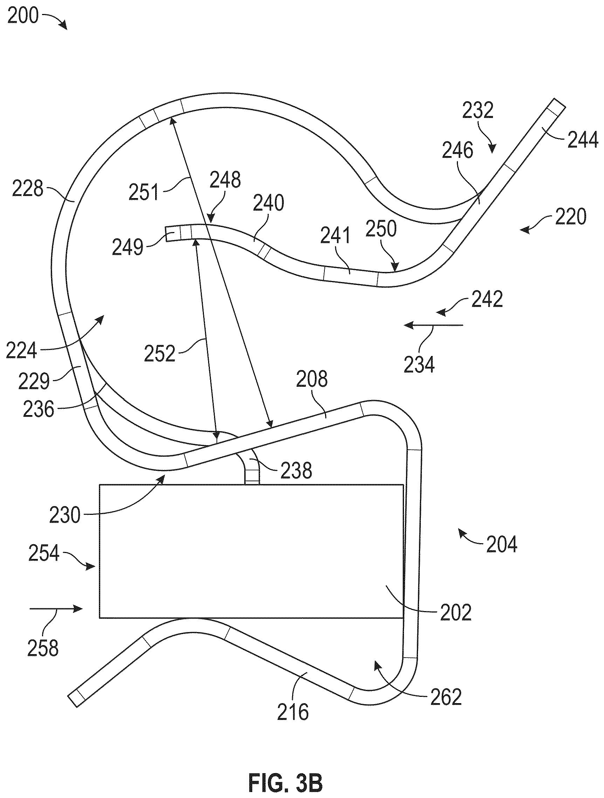

In some examples, it may be advantageous to include an additional component to further secure a bracket to a building structure, and allow a cable or conduit secured within the bracket to be resiliently released. For example, one or more fingers can extend into a support channel from an opposite side of the support channel than corresponding one or more inner arms. For example, as shown in FIGS. 3A and 3B, a bracket 200 includes a central finger 236, to further secure a bracket to a building structure, and allow a cable or conduit secured within the bracket to be resiliently released.

Except as noted below, the bracket 200 may be substantially identical to the bracket 100 or otherwise utilize similar overall structures. Thus, discussion above for the bracket 100 also applies to the bracket 200 unless otherwise limited or required. For example, the bracket 200 includes an attachment portion 204 and a support clip 220 that define a first insertion direction 234 and a second insertion direction 258. Further still, the bracket 200 includes an attachment interface 212, a distal end 249, a first insertion opening 242, an arm tab 244, a concave curvature 248 and a convex curvature 250 of inner arms 240, an attachment opening 254, and an attachment tab 286, all of which are similar to the similar numbered components of bracket 100. As shown, the attachment arm 216 and intermediate arm 208 of the attachment portion 204 do not include engagement interfaces. However, in some examples, the bracket 200 can include engagement interfaces that extend into the attachment channel 262 (e.g., that are substantially identical to the engagement interfaces 182 of bracket 100).

As discussed above, the bracket 200 differs from the bracket 100 in that the bracket 200 includes the central finger 236. The central finger 236 is integrally formed with an outer arm 228. Specifically, the central finger 236 is integrally formed along the outer arm 228 between a proximal end 230 and distal end 232 of the outer arm 228. In some examples, the central finger 236 is integrally formed with the proximal end 230 of the outer arm 228. The central finger 236 can be generally concave relative to a first channel 224. At a distal end of the central finger 236, the central finger 236 includes a finger tab 238 that can be generally convex relative to the first channel 224. In some examples, the central finger 236 may be integrally formed with the outer arm 228 and the intermediate arm 208. In some examples, the finger tab 238 may extend into a second channel 262.

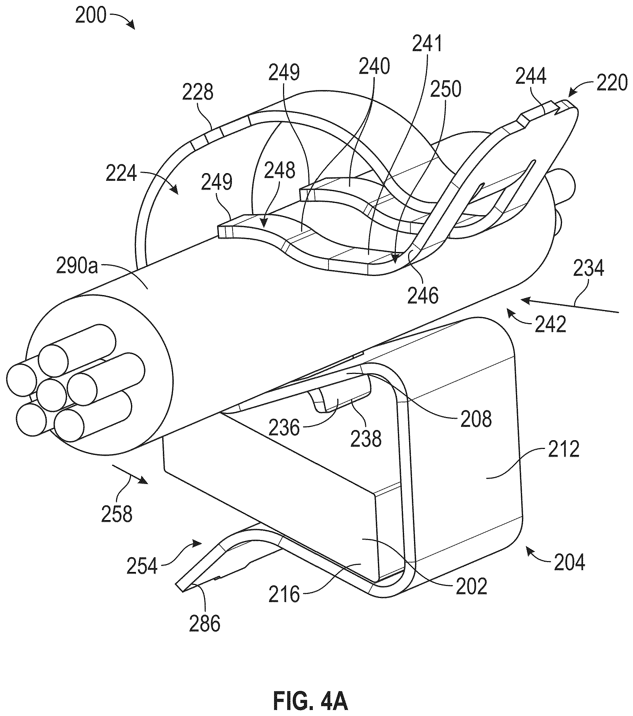

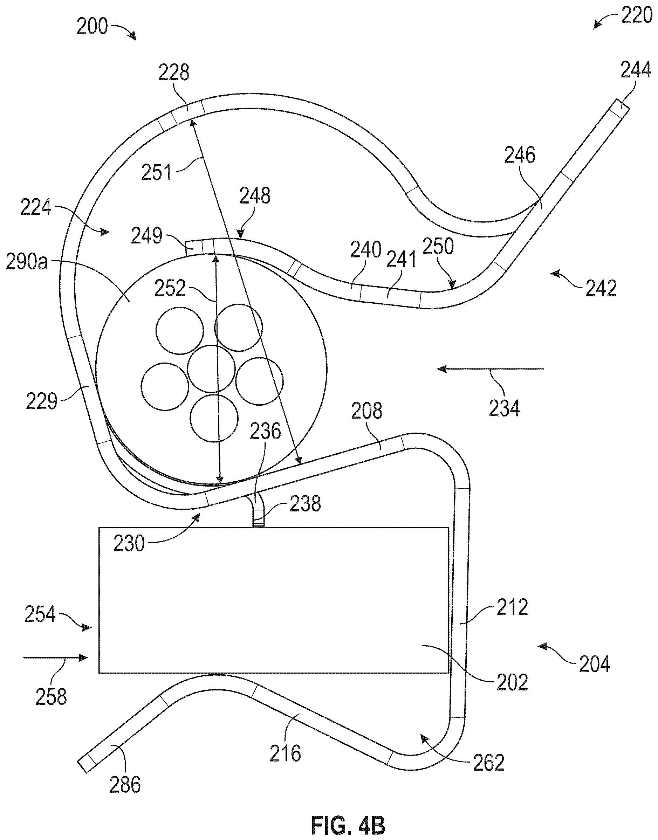

Similar to the bracket 100, the inner arms 240 and the outer arm 228 of the bracket 200 may allow the bracket 200 to resiliently secure a range of sizes of cable or conduit. For example, the inner arms 240 of the bracket 200 may allow the bracket 200 to resiliently secure a first size of a cable or conduit, and the outer arm 228 may allow the bracket 200 to resiliently secure a second size of a cable of conduit, with the first size of the cable or conduit being smaller than the second size of the cable or conduit. As shown in FIGS. 4A and 4B, a cable 290b has a larger diameter than a cable 290a. In some examples, the cable 290a has a diameter of 11 mm and the cable 290b has a diameter of 15 mm. In some examples, the bracket 200 may be configured to secure a cable or conduit with a diameter in a first range. In some examples, the bracket 200 may be configured to secure a cable or conduit with a diameter in a first range between 11 mm and 15 mm.

In some examples, the outer arm 228 may include a straight portion 229 (i.e., non-curved portion) proximate to the proximal end 230. The straight portion 229 may contribute to the support width 251 being larger than the support width 151. Thus, the support clip 220 may be allowed to receive cable or conduit via the outer arm 228 with larger diameters before deflection, effectively increasing the support width 251.

The straight portion 229 may also contribute to the reduced support width 252 being larger than the reduced support width 152. Thus, the support clip 220 may be allowed to receive cable or conduit via the inner arms 240 with larger diameters before deflection, effectively increasing the reduced support width 252.

In some examples, the straight portion 229 may provide improved resilient response for the support clip 220. Specifically, the straight portion 229 may increase (or beneficially localize) the strength of the resilient response that occurs when a cable or conduit is received within the channel 224.

As shown in FIGS. 3, the inner arms 240 may include a straight portion 241 (i.e., non-curved portion). Specifically, the spring portion 246 may include the straight portion 241 between the concave curvature 248 and the convex curvature 250. Similar to the straight portion 229, the straight portion 241 may localize or otherwise control deflection to provide improved response characteristics for receiving and securing cable or conduit with the inner arms 240. In some examples, the straight portion 241 may allow the distal end 249 to extend farther across the first channel 224 without excessive constriction of an entrance into the channel 224 or excessive reduction in the reduced support width 252.

Additionally, in some examples, the central finger 236 may further allow the support clip 220 to resiliently secure the range of sizes of cable or conduit. For example, when a cable 290a of the first size is secured within the first channel 224, as shown in FIGS. 4A and 4B, the central finger 236 may resiliently press the cable 290a toward the inner arms 240 on the opposite side of the first channel 224 such that the cable 290a is resiliently supported within the reduced support width 252. Simultaneously, in some cases, the finger tab 238 may resiliently press the building structure 202 (e.g., with a corresponding increased reaction force to urge the cable 290a toward the inner arms 240 to be thus secured within the first channel 224).

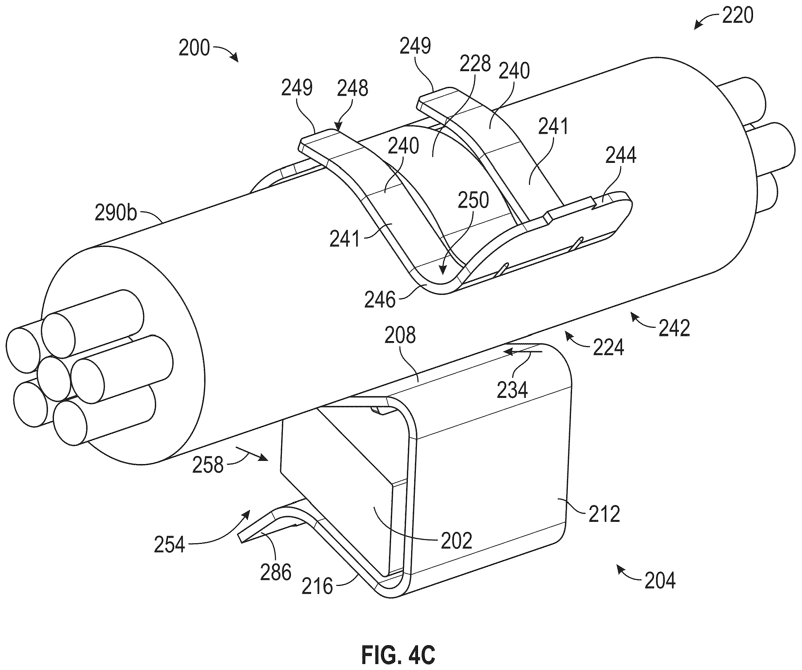

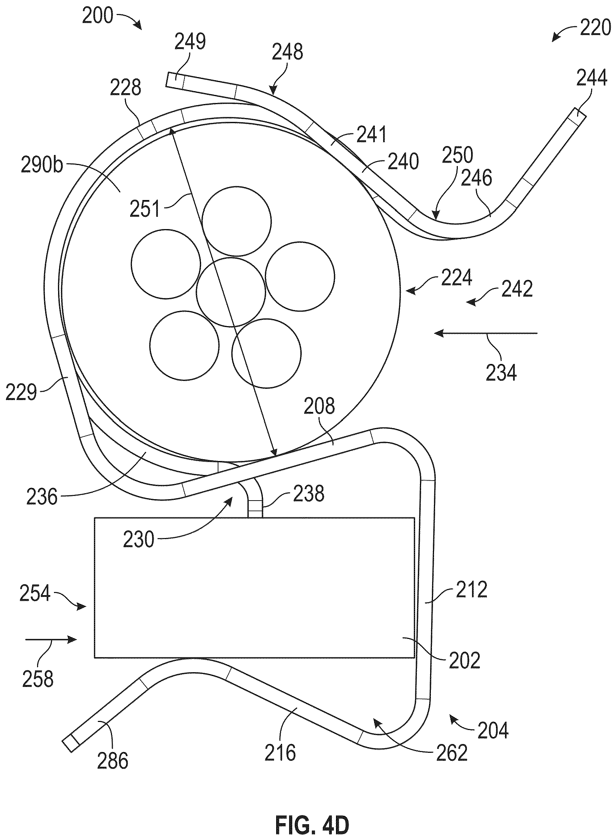

Similarly, when a cable 290b of the second size (e.g., larger than the first size) is secured within the first channel 224, as shown in FIGS. 4C and 4D, the central finger 236 may also resiliently engage the cable 290a within the first channel 224. Simultaneously, in some cases, the finger tab 238 may also resiliently press the building structure 202. Thus, the engagement of the cable 290a by the central finger 236 can further help to resiliently secure the cable 290a within the first channel 224.

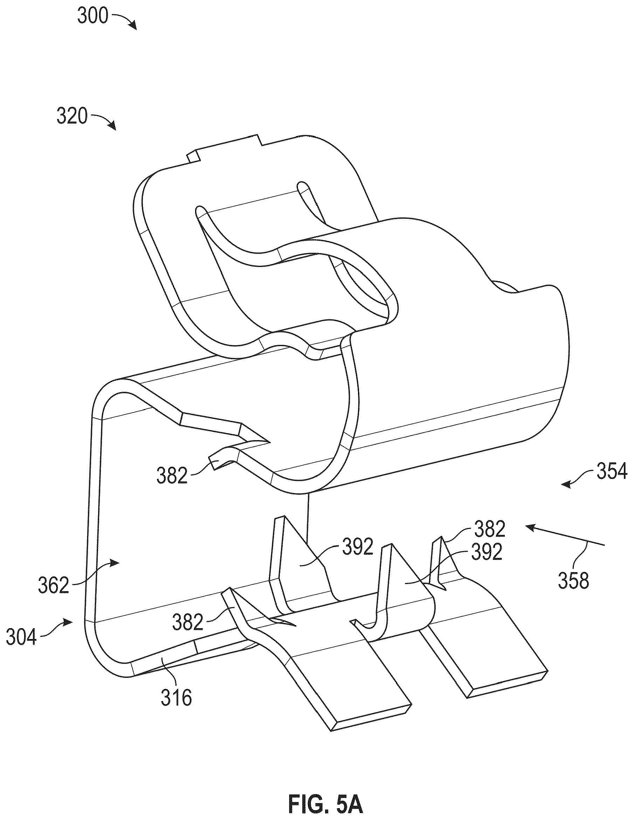

In some examples, it may be advantageous to include engagement interfaces to improve engagement of a bracket to a building structure or to allow for the bracket to be secured to building structures with various widths. For example, as shown in FIGS. 5A-5C, a bracket 300 may include engagement interfaces 392 secure the bracket 300 to a building structure 302 and allow for the bracket 300 to be secured to building structure 302 with various widths.

Except as noted below, the bracket 300 may be substantially identical to the bracket 100 or otherwise utilize similar overall structures. For example, the bracket 300 includes an attachment portion 304 and a support clip 320 may be substantially identical to the attachment portion 104 and the support clip 120. Thus, unless otherwise indicated, discussion of any particular components of the bracket 100 above also apply to similarly named or numbered components of the bracket 300, and vice versa.

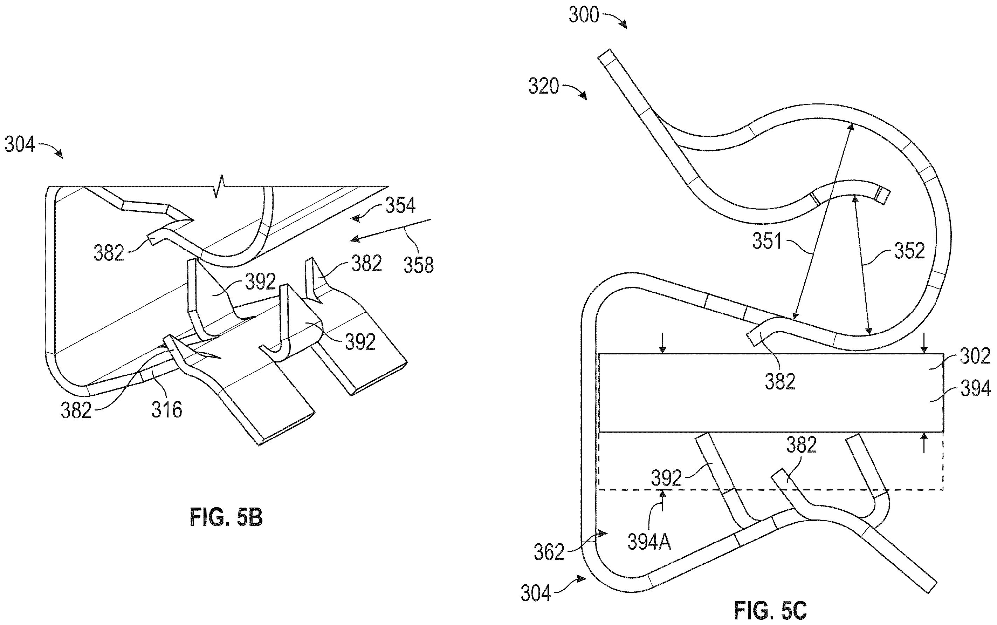

As discussed above, the bracket 300 includes engagement interfaces 392, which may differ from the engagement interfaces of the bracket 100. In some examples, the bracket 300 may include two engagement interfaces 392, as shown in FIGS. 5. In other examples, the bracket 300 may include one engagement interface. In other examples, the bracket 300 may include more than two engagement interfaces.

In addition to engagement interfaces 382, which are similar to the engagement interfaces 182 of FIGS. 1, the bracket 300 includes engagement interfaces 392. In some examples, as shown in the example bracket 300, the engagement interfaces 392 may be integrally formed with an attachment arm 316. Specifically, the engagement interfaces 392 may be integrally formed at a convex curvature of the attachment arm 316. The engagement interfaces 392 may extend into a second channel 362 of the bracket 300. Thus, the engagement interfaces 392 may contact the building structure 302 when the building structure 302 is inserted into the second channel 362 in a second insertion direction 358 via an attachment opening 354. Further, in some examples, the engagement interfaces 392 may resiliently deflect in a direction parallel to the second insertion direction 358. Additionally, when the bracket 300 is removed from the building structure, the engagement interfaces may resist the removal of the bracket 300.

The engagement interfaces 392 of the bracket 300 may allow the bracket 300 to be resiliently secured to the building structure 302. Further, the engagement interfaces 392 may allow for a range of thickness 394 of the building structure 302 (see FIG. 5C). For example, the engagement interfaces 392 may allow the bracket 300 to be resiliently secured to a building structure 302 of a first thickness or a second thickness (see, e.g., 394A), with the first thickness being smaller than the second thickness. Thus, the engagement interfaces 392 allow the bracket 300 to be secured to a range of thicknesses of the building structure 302. In some examples, the building structure 302 may have a thickness of 4 mm. In other examples, the building structure 302 may have a thickness of 12 mm. In some examples, the engagement interfaces 392 allow for the bracket 300 to be secured to a range of thicknesses of the building structure 302. For example, the bracket 300 may be secured to a building structure 302 with a thickness between 4 mm and 12 mm.

**In** some examples, it may be advantageous to include engagement interfaces on an engagement finger to improve engagement of a bracket to a building structure or to allow for the bracket to be secured to building structures with various widths. Further, it may be advantageous to provide a bracket with one inner arm. For example, a bracket 400 may include engagement interfaces 492 on an engagement finger 496 to secure the bracket 400 to a building structure (not shown) and allow for the bracket 400 to be secured to building structure with various widths. Thus, in addition to engagement interfaces 482 which are similar to the engagement interfaces of FIGS. 1, the bracket 400 may include additional engagement interfaces 492 that are relatively more deflectable than the engagement interfaces 482 (via the finger 496) for improved overall installation and hold.

Except as noted below, the bracket 400 may be substantially identical to the bracket 300 or otherwise utilize similar overall structures. For example, the bracket 400 includes an attachment portion 404 and a support clip 420 that may be similar to the attachment portion 304 and the support clip 320. Thus, unless otherwise indicated, discussion of any particular components of the bracket 300 above also applies to similarly named or numbered components of the bracket 400, and vice versa. Additionally, the bracket 400 includes a straight portion 429 and distal end 449, which is similar to the straight portion 229 and the distal end 449 of FIGS. 3.

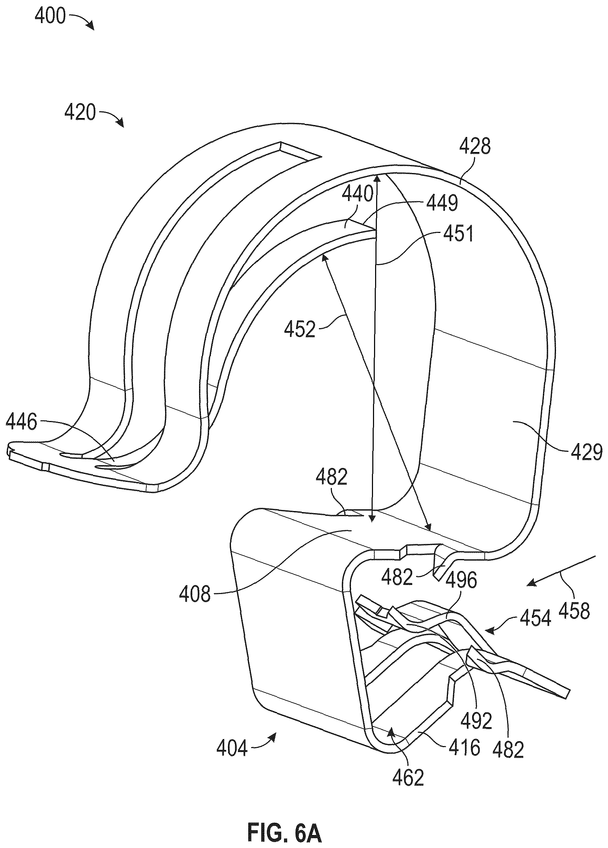

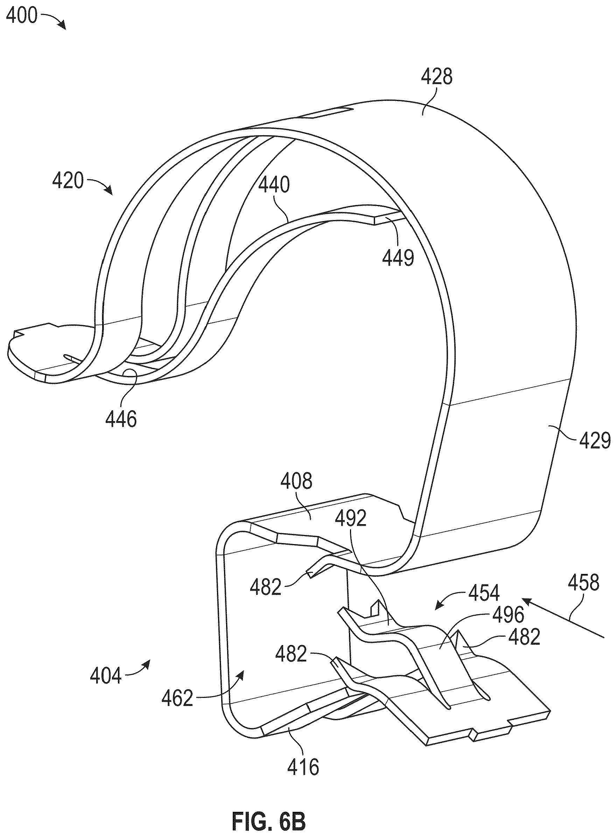

As discussed above, the bracket 400 includes a central (e.g., one) inner arm 440, which may differ from the inner arms of the bracket 300. As shown in FIGS. 6A and 6B, the inner arm 440 is integrally formed with the outer arm 428. Additionally, the bracket 400 includes the engagement finger 496 on the attachment arm 416. In some examples, such as the example bracket 400, the engagement finger 496 include the engagement interface 492.

In some examples, as shown in the example bracket 400, the engagement finger 496 may be integrally formed with the attachment arm 416. Specifically, the engagement finger 496 may be integrally formed at a convex curvature of the attachment arm 416. The engagement finger 496 and engagement interface 492 may extend into a second channel 462. In some examples, the engagement finger 496 may extend in a direction opposite from the inner arm 440 relative to the intermediate arm 408. Thus, the engagement finger 496 and the engagement interface 492 may contact the building structure when the building structure is inserted into the second channel 462 in a second insertion direction 458 via an attachment opening 454. Further, in some examples, the engagement finger 496 may resiliently deflect in a direction parallel to the second insertion direction 458. Additionally, when the bracket 400 is removed from the building structure, the engagement finger 496 may resist the removal of the bracket 400.

Similar to the engagement interfaces 392, the engagement finger 496 and engagement interface 492 of the bracket 400 may allow the bracket 400 to be resiliently secured to the building structure. Further, the engagement finger 496 may allow for a range of thickness of the building structure. For example, the engagement finger 496 may allow the bracket 400 to be resiliently secured to a building structure of a first thickness or a second thickness, with the first thickness being smaller than the second thickness. Thus, the engagement finger 496 may allow the bracket 400 to be secured to a range of thicknesses of the building structure. In some examples, the engagement finger 496 allow for the bracket 400 to be secured to a range of thicknesses of the building structure.

In some examples, it may be advantageous to include an additional component to improve engagement of a bracket to a building structure. Further, it may be advantageous to provide an additional component to secure a cable or conduit. For example, a bracket 500 includes an additional component, e.g., a central finger 536, to further secure a bracket to a building structure, and allow a cable or conduit secured within the bracket to be resiliently released.

Except as noted below, the bracket 500 may be substantially identical to the bracket 400 or otherwise utilize similar overall structures. For example, the bracket 500 includes an attachment portion 504 and a support clip 520 that may be similar to the attachment portion 404 and the support clip 420. Thus, unless otherwise indicated, discussion of any particular components of the bracket 400 above also applies to similarly named or numbered components of the bracket 500, and vice versa. Similarly, the bracket 500 may be substantially identical to the bracket 200 or otherwise utilize similar overall structures, and the discussion of any particular components of the bracket 200 above also applies to similarly named or numbered components of the bracket 500, and vice versa.

In some examples, as shown in the example bracket 500, engagement interfaces 592 may be integrally formed with an attachment arm 516. Specifically, at least one of the engagement interfaces 592 may be integrally formed at an attachment convex curvature of the attachment arm 516, while at least one of the engagement interfaces 592 may be integrally formed with a distal end of the attachment arm 516 relative to an attachment interface 512.

As discussed above, the bracket 500 includes the central finger 536, which may differ from the central finger of bracket 200. The central finger 536 may be integrally formed with the attachment portion 504. Specifically, the central finger 536 may be integrally formed along an attachment interface 512 and an intermediate arm 508. At a distal end of the central finger 536, the central finger 536 includes a finger tab 538 that can be generally convex relative to the first channel 524. It should be noted that the central finger 536 can resiliently deflect to secure cable or conduit within a first channel 524 in a manner that may be similar to the central finger of bracket 300.

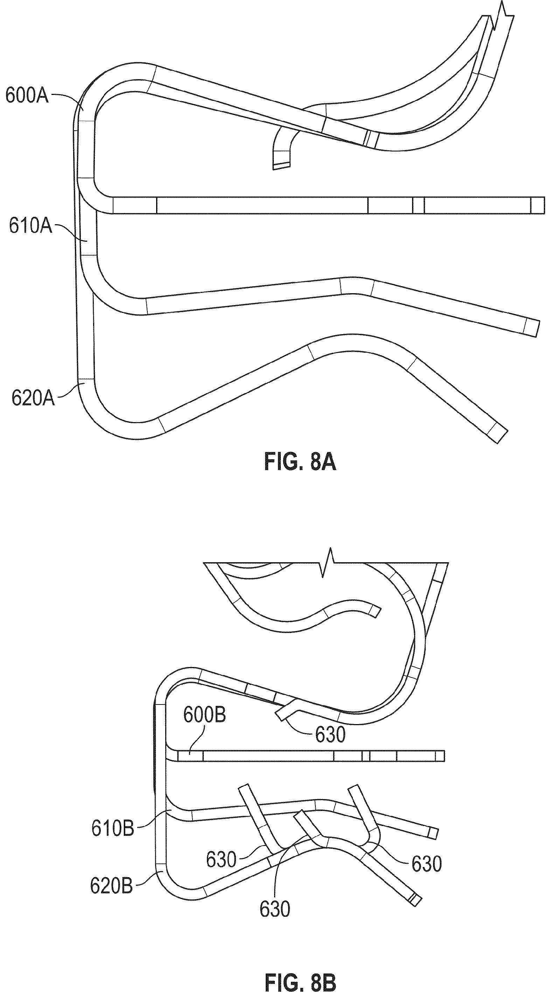

As discussed above, brackets can include attachment portions that are sized to be secured to various thicknesses of building structures. For example, as shown in FIG. 8A, an attachment portion 600A may be configured to be secured to a first building structure with a first range of thickness, an attachment portion 610A may be configured to be secured to a second building structure with a second range of thickness, and an attachment portion 620A may be configured to be secured to a third building structure with a third range of thickness.

The attachment portions 600A, 610A, and 620A are substantially identical to the attachment portions (e.g., attachment portion 104, attachment portion 204) described above or otherwise utilize similar overall structures, and thus the discussion of the above attachment portions can be applied to the attachment portions 600A, 610A, and 620A. Each of the attachment portions 600A, 610A, and 620A can be configured to resiliently deflect to accommodate for a range widths of building structures. Each respective range (e.g., a first range, a second range, and a third range) begins where the previous range end. For example, the first range includes a first range bottom value and a first range top value, the second range includes a second range bottom value and a second range top value, and the third range includes a third range bottom value and a third range top value. The third range bottom value is about larger than the second range top value and the second range bottom value is about larger than the first range top value. Thus, each attachment portion 600A, 610A, and 620A can be configured to be secured to a specific thickness of the building structure.

Alternatively, as shown in FIG. 8B, brackets can include attachment portions that include engagement interfaces that can accommodate a larger range of widths of building structures. For example, an attachment portion 600B may be configured to be secured to a first building structure with a first range of thickness, an attachment portion 610B may be configured to be secured to a second building structure with a second range of thickness, and an attachment portion 620B may be configured to be secured to a third building structure with a third range of thickness. Similar to the attachment portions 600A and 610A, the attachment portion 600B is configured to be secured to a range of building structure thicknesses that may include values smaller than the range of building structure thicknesses that the attachment portion 610B is configured to be secured to. However, with the engagement features 630 (e.g., similar to the above engagement interfaces and engagement fingers), the attachment portion 620B can be attached to building structure with a larger range of thicknesses because the engagement features 630 may resiliently deflect and/or engage the building structure.

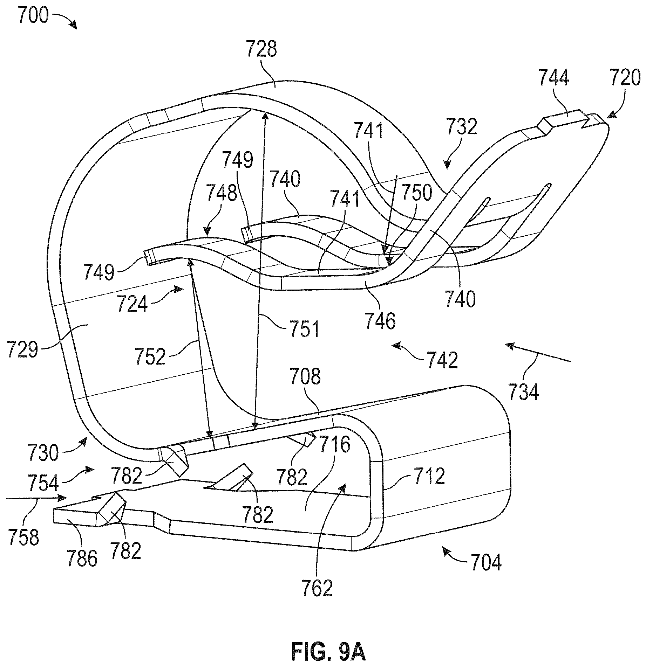

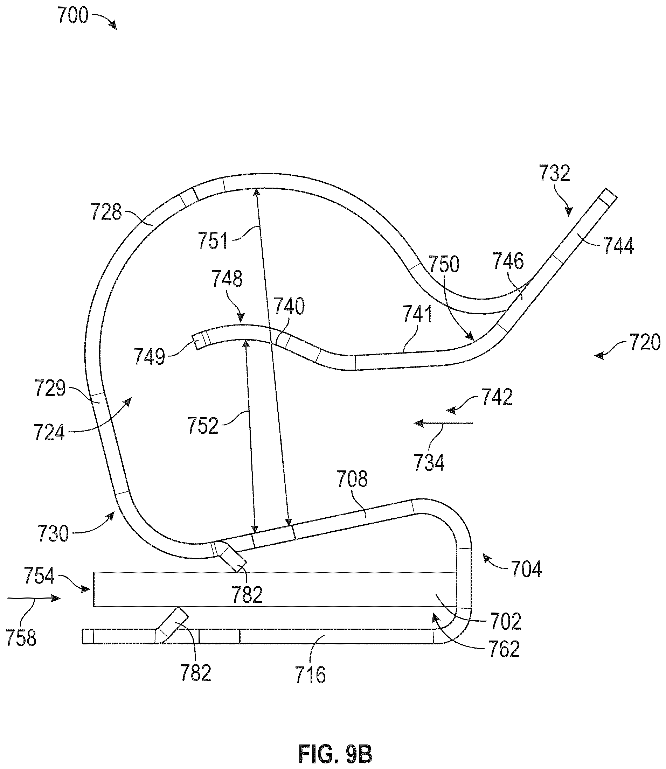

In some examples, it may be advantageous to include at least one inner arm with a flatter profile to improve receiving and resiliently support a cable or conduit. Further, it may be advantageous to provide an outer arm with a larger curvature. For example, a bracket 700 may include inner arms 740 on an outer arm 728 to provide resilient support for a cable or conduit. The inner arms 740 may include a spring portion 746 that at least partially extends at least partially across a support channel 724. The outer arm 728 may include a substantially flat portion between a proximal end 730 and a distal end 732 thereof. Thus, the bracket 700 of FIG. 9A and 9B may include improvements for resilient support.

Except as noted below, the bracket 700 may be substantially identical to the bracket 100 or otherwise utilize similar overall structures. For example, the bracket 700 includes building structure 702, an attachment portion 704, an intermediate arm 708, an attachment interface 712, an attachment arm 716, a support clip 720, a first channel 724, a first insertion direction 734, a first insertion opening 742, arm tab 744, an attachment opening 754, a second insertion direction 758, a second channel 762, and engagement features 782 that may be similar to the attachment portion 104, intermediate arm 108, attachment interface 112, attachment arm 116, support clip 120, first channel 124, first insertion direction 134, first insertion opening 142, arm tab 144, attachment opening 154, the second insertion direction 158, the second channel 162, and engagement interfaces 182. Thus, unless otherwise indicated, discussion of any particular components of the bracket 100 above also applies to similarly named or number components of the bracket 700, and vice versa.

The bracket 700 also includes similar structure as the bracket 100 of FIGS. 1. For example, the bracket 700 also includes a proximal end 730 and distal end 732 of the outer arm 728, an arm tab 144, a spring portion 746, a distal end 749, a concave curvature 748, a convex curvature 750, support width 751, and reduced support width 752 which may be similar to the proximal end 130, distal end 132, arm tab 144, spring portion 146, distal end 149, concave curvature 148, convex curvature 150, support width 151, and reduced support width 152. Thus, unless otherwise indicated, discussion of any particular components of the bracket 100 above also applies to similarly named or number components of the bracket 700, and vice versa.

As discussed above, the bracket 700 includes the outer arm 728 and the inner arms 740, which may differ from the outer arm 128 and the inner arms 140. As shown in FIG. 9A and FIG. 9B ("FIGS. 9" herein), the outer arm 728 may include a straight portion 729 proximate to the proximal end 730, similar to the outer arm 228. The straight portion 729 may increase the support width 751 such that the support width 751 may be larger than the support width 151. Thus, the support clip 720 may be allowed to receive cable or conduit via the outer arm 728 with larger diameters before deflection, effectively increasing the support width 751.

The straight portion 729 may also increase the reduced support width 752 such that the reduced support width 752 may be larger than the reduced support width 152. Thus, the support clip 720 may be allowed to receive cable or conduit via the inner arms 740 with larger diameters before deflection, effectively increasing the reduced support width 752.

In some examples, the straight portion 729 may also provide improved resilient response for the support clip 720. Specifically, the straight portion 729 may increase the amount of resilient deflection that occurs when a cable or conduit is received within the channel 724.

As shown in FIGS. 9, the inner arms 740 may include a substantially straight portion 741 (i.e., non-curved portion), similar to the inner arms 240. Specifically, the spring portion 746 may include the straight portion 741 between the concave curvature 748 and the convex curvature 750. Similar to the straight portion 729, the straight portion 741 may increase a resilience of the inner arms 740. In some examples, the straight portion 741 may allow the distal end 749 to further extend into the first channel 724. In other words, the straight portion 741 may allow the inner arms 740 to extend at least partially the first channel 724.

In some examples, the straight portion 741 may decrease the reduced support width 752 such that the inner arms 740 may be allowed to receive and resiliently support cable or conduit with smaller diameters before the inner arms 740 deflect.

As also shown in FIGS. 9, the attachment arm 716 may also include an attachment tab 786, which may differ from the attachment tab 186. Specifically, the attachment tab 786 may not be bent relative to the attachment opening 754, or may be bent at a different angle than shown in the various figures.

It should be contemplated that the attachment tab 786 may be bent convexly relative to the attachment opening 754 such that the attachment arm 716 is bent in a similar manner to the attachment arm 116. Additionally, it should be contemplated that the attachment tab 186 may be configured to be identical to the attachment tab 786 such that the attachment arm 116 is not bent relative to the attachment opening 754.

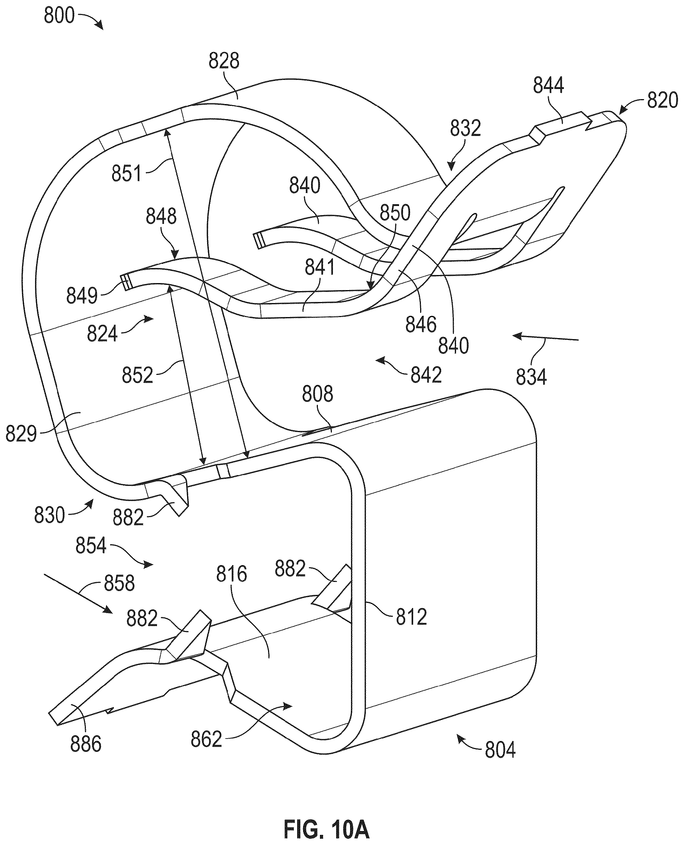

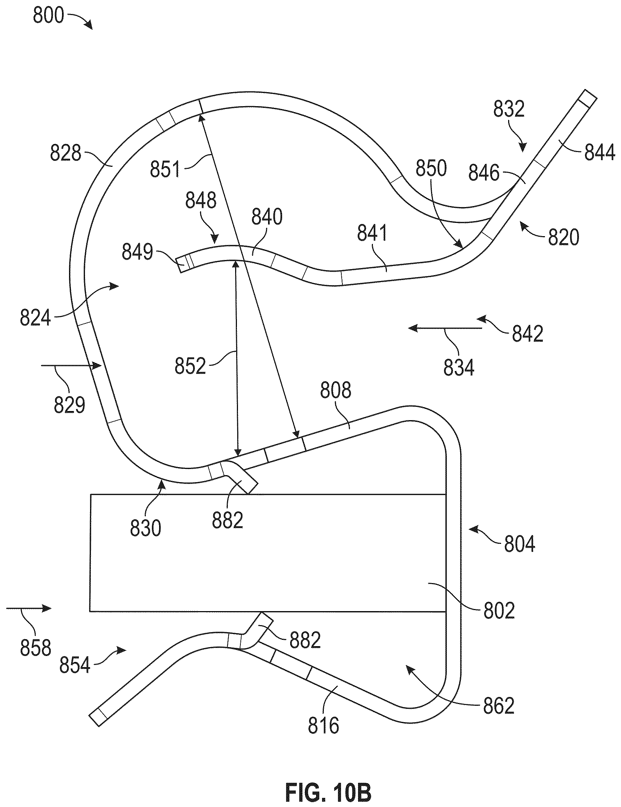

In some examples, it may be advantageous to include the inner arms with a longer straight portion such that the inner arms extend further across a first channel for increased resilient support. For example, a bracket 800 may include inner arms 840 with a straight portion 841 on an outer arm 828 with a straight portion 829. Thus, the bracket 800 of FIG. 10A and 10B may include improvements for resilient support.

Except as noted below, the bracket 800 may be substantially identical to the bracket 200 or otherwise utilize similar overall structures. For example, the bracket 800 includes an attachment portion 804, an intermediate arm 808, an attachment interface 812, an attachment arm 816, a support clip 820, a first channel 824, a proximal end 830, a distal end 832, a first insertion direction 834, a first insertion opening 842, an arm tab 844, a spring portion 846, a distal end 849, a concave curvature 848, a convex curvature 850, a support width 851, a reduced support width 852, an attachment opening 854, a second insertion direction 858, and a second channel 862 that may be similar to the attachment portion 204, intermediate arm 208, attachment interface 212, attachment arm 216, support clip 220, first channel 224, proximal end 230, distal end 232, first insertion direction 234, first insertion opening 242, arm tab 244, spring portion 246, distal end 249, concave curvature 248, convex curvature 250, support width 251, reduced support width 252, attachment opening 254, the second insertion direction 258, and the second channel 262. Thus, unless otherwise indicated, discussion of any particular components of the bracket 200 above also applies to similarly named or number components of the bracket 800, and vice versa.

As discussed above, and as shown in FIGS. 10, the bracket 800 may include the straight portion 829 on the outer arm 828. The straight portion 829 may allow a greater support width 851. The inner arms 840 may include the straight portion 841. The straight portion 841 may allow a smaller (or otherwise calibrated) reduced support width 852.

The bracket 800 may be different from the bracket 200 in that the bracket 800 may not include the central finger 236. Further, the bracket 800 may include engagement interfaces 882 to be secured to building structure 802. In some examples, the bracket 800 may include an outward flare at the distal end 832 of the outer arm 828. The outward flare may increase the first insertion opening 842.

In some examples, the inner arms 840 may be cantilevered from the outer arm 828. Specifically, the inner arms 840 may be cantilevered from the outer arm 828 such that the reduced support width 852 may be defined by an intermediate length of the inner arms 840 that are spaced apart from the distal end 849 and proximal ends (i.e., an end of the inner arms 840 that connected to the outer arm 828) of the respective inner arms 840. In some examples, the reduced support width 852 is defined by intermediate portion of the inner arms 840 that is convex (i.e., convex curvature 850) relative to the attachment portion 804. In other examples, the reduced support width 852 is defined by intermediate portion of the inner arms 840 that is concave (i.e., concave curvature 848) relative to the attachment portion 804.

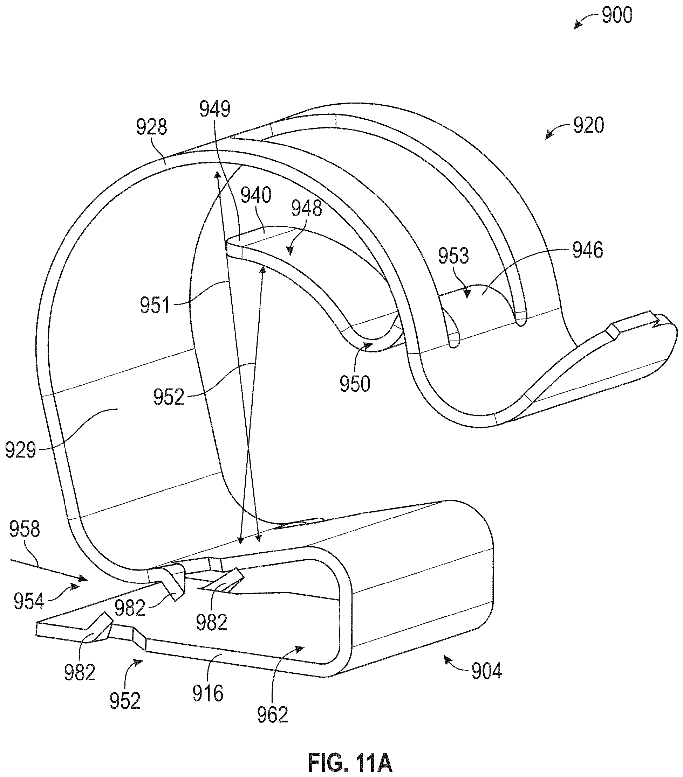

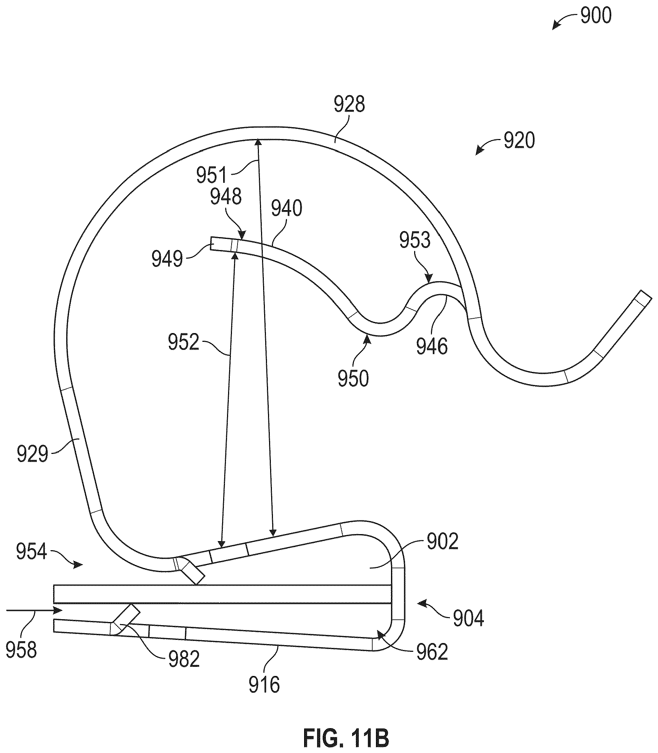

In some examples, it may be advantageous to provide a single inner arm that includes a concave curvature and convex curvature for additional resilience. For example, a bracket 900 may include an inner arm 940 that includes a first concave curvature 948, a convex curvature 950, and a second concave curvature 953. Thus, the bracket 900 of FIGS. 11 may include improvements for resilient support.

Except as noted above, the bracket 900 may be substantially identical to the bracket 400 or otherwise utilize similar overall structures. For example, the bracket 900 includes an attachment portion 904, an attachment arm 916, a support clip 920, a straight portion 929, a spring portion 946, a support width 951, a reduced support width 952, an attachment opening 954, a second insertion direction 958, second channel 962, and engagement interfaces 982 that may be similar to the attachment portion 404, intermediate arm 408, attachment arm 416, support clip 420, spring portion 446, support width 451, reduced support width 452, attachment opening 454, and the second insertion direction 458. Thus, unless otherwise indicated, discussion of any particular components of the bracket 400 above also applies to similarly named or number components of the bracket 900, and vice versa.

In some examples, such as shown in FIGS. 11, the bracket 900 may include a first concave curvature 948, a convex curvature 950, and a second concave curvature 953 on the inner arm 940. In particular, the convex curvature 950 and second concave curvature 953 may be included in the spring portion 946. As similarly discussed above, the convex curvature 950, and second concave curvature 953 may thus provide improved resilient response of the inner arm 940.

999In some examples, the bracket 900 includes an attachment portion 904 that is similar to the attachment portion 704 of FIGS. 11. Accordingly, the discussion of any particular components of the attachment portion 704 above also applies to similarly named or number components of the bracket 900, and vice versa.

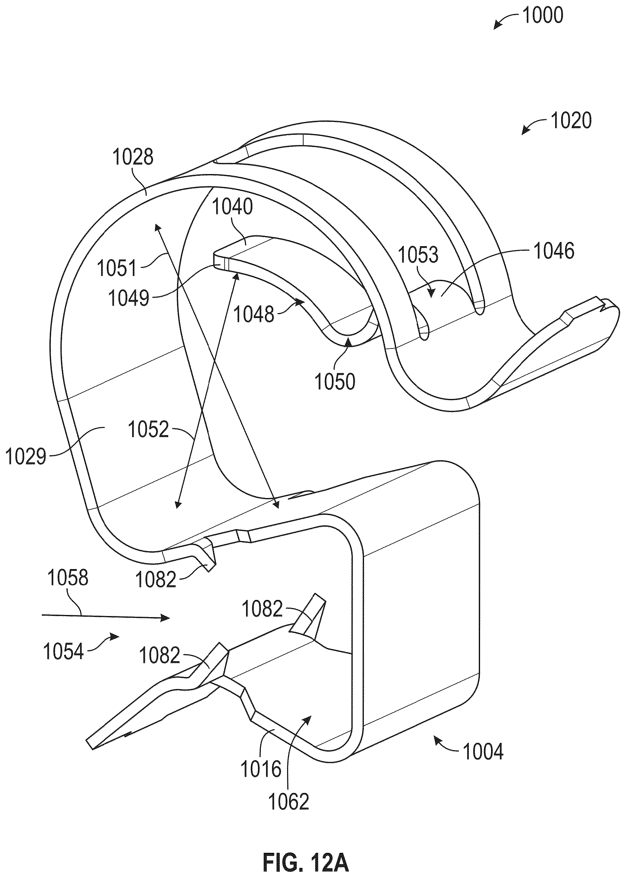

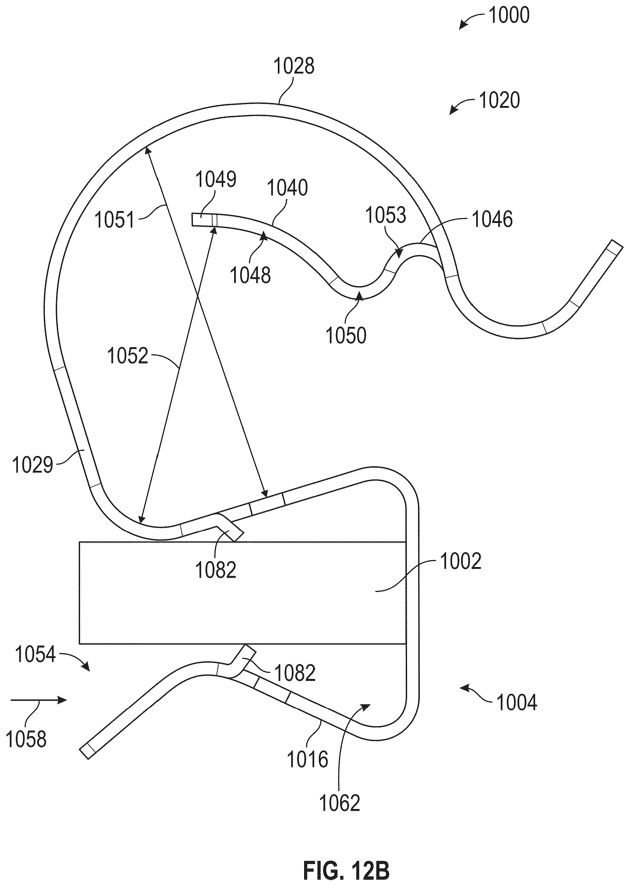

In some examples, it may be advantageous to provide a single inner arm that includes a concave curvature and convex curvature for additional resilience along with engagement features of an attachment portion to provide resilient support of a conduit or cable with improved means for attachment. For example, the bracket 1000 may include an inner arm 1040 that includes a first concave curvature 1048, a convex curvature 1050, and a second concave curvature 1053. Thus, the bracket 1000 of FIGS. 12 may include improvements for resilient support and attachment.

Except as noted above, the bracket 1000 may be substantially identical to the bracket 900 or otherwise utilize similar overall structures. For example, the bracket 1000 includes building structure 1002, an attachment portion 1004, an attachment arm 1016, a support clip 1020, an outer arm 1028, a straight portion 1029, an inner arm 1040, a spring portion 1046, a first concave curvature 1048, a convex curvature 1050, a distal end 1049, a support width 1051, a reduced support width 1052, a second concave curvature 1053, an attachment opening 1054, a second insertion direction 1058, a second channel 1062, and engagement interfaces 1082 that may be similar to the attachment portion 904, attachment arm 916, support clip 920, outer arm 928, inner arm 1040, spring portion 946, first concave curvature 948, convex curvature 950, distal end 949, support width 951, reduced support width 952, second concave curvature 953, attachment opening 954, and the second insertion direction 958. Thus, unless otherwise indicated, discussion of any particular components of the bracket 900 above also applies to similarly named or number components of the bracket 1000, and vice versa.

In some examples, such as shown in FIGS. 12, the bracket 1000 includes an attachment portion 1004 that is similar to the attachment portion 804 of FIGS. 12. Accordingly, the discussion of any particular components of the attachment portion 804 above also applies to similarly named or number components of the bracket 1000, and vice versa. Indeed, in view of the noted similarities in structure and function, discussion above of any particular numbered component for any of the figures can also apply to other similarly numbered components in the examples of any of the other figures, unless otherwise indicated.

Thus, examples of the disclosure can provide an improved bracket for securing cable or conduit relative to building structure. For example, some configurations of the disclosed technology can adaptably and resiliently receive and secure cable or conduit of a variety of sizes and can be installed on a range of thicknesses of building structure.

It is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

Also as used herein, unless otherwise specified or limited, directional terms are presented only with regard to the particular example and perspective described. For example, reference to features or directions as "horizontal," "vertical," "front," "rear," "left," "right," "upper," "lower," and so on are generally made with reference to a particular figure or example and are not necessarily indicative of an absolute orientation or direction. However, relative directional terms for a particular example may generally apply to alternative orientations of that example. For example, "front" and "rear" directions or features (or "right" and "left" directions or features, and so on) may be generally understood to indicate relatively opposite directions or features for a particular example, regardless of the absolute orientation of the example (or relative orientation relative to environmental structures). "Lateral" and derivatives thereof generally indicate directions that are generally perpendicular to a vertical or axial direction for a relevant reference frame (e.g., extending in a radial direction relative to a reference axis).

Also as used herein, ordinal numbers are used for convenience of presentation only and are generally presented in an order that corresponds to the order in which particular features are introduced in the relevant discussion. Accordingly, for example, a "first" feature may not necessarily have any required structural or sequential relationship to a "second" feature, and so on. Further, similar features may be referred to in different portions of the discussion by different ordinal numbers. For example, a particular feature may be referred to in some discussion as a "first" feature, while a similar or substantially identical feature may be referred to in other discussion as a "third" feature, and so on.

As used herein, unless otherwise limited or specified, "substantially identical" refers to two or more components or systems that are manufactured or used according to the same process and specification, with variation between the components or systems that are within the limitations of acceptable tolerances for the relevant process and specification. For example, two components can be considered to be substantially identical if the components are manufactured according to the same standardized manufacturing steps, with the same materials, and within the same acceptable dimensional tolerances (e.g., as specified for a particular process or product).

Also as used herein, unless otherwise limited or defined, "integral" and derivatives thereof (e.g., "integrally") describe elements that are manufactured as a single piece without fasteners, adhesive, or the like to secure separate components together. For example, an element stamped, cast, or otherwise molded as a single-piece component from a single piece of sheet metal or using a single mold, without rivets, screws, or adhesive to hold separately formed pieces together is an integral (and integrally formed) element. In contrast, an element formed from multiple pieces that are separately formed initially then later connected together, is not an integral (or integrally formed) element.

Unless otherwise limited or defined, the terms "about" and "approximately," as used herein with respect to a reference value, refer to variations from the reference value of ± 20% or less (e.g., ± 15, ± 10%, ± 5%, etc.), inclusive of the endpoints of the range. Similarly, as used herein with respect to a reference value, the term "substantially equal" (and the like) refers to variations from the reference value of less than ± 5% (e.g., ± 2%, ± 1%, ± 0.5%) inclusive.

Unless otherwise limited or defined, the term "diameter," as used herein with respect to a diameter of a conduit or cable, specifically that of electrical metallic tubing (EMT), refers to a nominal diameter of EMT conduit as defined by ANSI C80.3-1977. In this regard, actual measured diameter - in contrast to nominal diameter, as noted above - can be specified particularly as an "inner actual diameter" or an "outer actual diameter."

As used herein, unless otherwise limited or defined, directional terms are relative to a conventional stud installation, with a "front" face of a stud facing outward from a corresponding wall cavity (e.g., into a living or working space bounded by the relevant stud wall), and "forward" and "rearward" directions defined accordingly.

As used herein, unless otherwise limited or defined, the terms concave and convex indicate inward and outward hollows, respectively, along a particular side or surface of a body or sub-component of the body. In some cases, concave and convex surfaces can exhibit continuous curvature, with or without a varying radius/radii of curvature. In some cases, concave and convex surfaces can exhibit angled profiles that define part or all of the corresponding hollow. For stamped bodies and others, as reflected in the various figures and description above, inclusion of a concave surface on one side of a relevant portion of material may correspond to inclusion of a convex surface on an opposite side of the relevant portion of material, and vice versa. Accordingly, unless otherwise indicated in text or illustrations, discussion above of a convex feature on one side of a component (e.g., along an inner or outer arm) should be understood to indicate a corresponding concave feature on an opposite side of the component, and vice versa.

In some implementations, devices or systems disclosed herein can be utilized, manufactured, installed, etc. using methods embodying aspects of the disclosed technology. Correspondingly, any description herein of particular features, capabilities, or intended purposes of a device or system should be considered to disclose, as examples of the disclosed technology a method of using such devices for the intended purposes, a method of otherwise implementing such capabilities, a method of manufacturing relevant components of such a device or system (or the device or system as a whole), and a method of installing disclosed (or otherwise known) components to support such purposes or capabilities. Similarly, unless otherwise indicated or limited, discussion herein of any method of manufacturing or using for a particular device or system, including installing the device or system, should be understood to disclose, as examples of the disclosed technology, the utilized features and implemented capabilities of such device or system. Methods of the disclosed technology may be presented in some cases with operations listed in a particular order. Unless otherwise required or specified, the operations of such methods can be implemented in different orders, in parallel, or as selected sub-sets of one or more individual operations (e.g., with a particular listed operation being implemented alone, rather than in combination with others).

Features which are described in the context of separate embodiments may also be provided in combination in a single embodiment. Features which are, for brevity, described in the context of a single embodiment, may also be provided separately or in any suitable sub-combination, or combined as new embodiments. The applicant hereby gives notice that new claims may be formulated to one or more features and/or combinations of such features during the prosecution of the present application or of any further application derived therefrom. Feature(s) of the bracket described may be incorporated into/used in a corresponding method and vice versa.

The previous description of the disclosed examples is provided to enable any person skilled in the art to make or use the disclosure. Various modifications to these examples will be readily apparent to those skilled in the art, and the generic principles defined herein may be applied to other examples without departing from the spirit or scope of the disclosure. Thus, the disclosure is not intended to be limited to the examples shown herein but is to be accorded the widest scope consistent with the principles and novel features disclosed herein.

## Claims

1. A bracket (200; 400; 500; 700; 900) to support cable or conduit, the bracket comprising:
an attachment portion (204; 404; 504; 704; 904) that defines an attachment channel (254; 454; 554; 754; 954) configured to receive a building structure (202; 402; 502;702; 902) to secure the bracket to the building structure; and
a support clip (220; 420; 520; 720; 920) that extends integrally from the attachment portion, the support clip integrally including:
an outer arm (228; 428; 528; 728; 928) that extends from a proximal end integral with the attachment portion, to a distal end, to define a support channel having a support width (251; 451; 551; 751; 951) to receive and resiliently support cable or conduit of a first diameter; and
an inner arm (240; 440; 540; 740; 940) that integrally extends from the distal end of the outer arm, at least partly across the support channel, to define a reduced support width (252; 452; 552; 752; 952) of the support channel, smaller than the support width, to receive and resiliently support cable or conduit of a second diameter that is smaller than the first diameter.

2. The bracket of claim 1, wherein the inner arm is cantilevered from the outer arm to extend at least partly across the support channel to a distal end (949) of the inner arm.

3. The bracket of claim 2, wherein the inner arm extends into the support channel.

4. The bracket of any of the preceding claims, wherein the inner arm connects to the outer arm at a spring portion (946) of the inner arm that includes a first bend (950) connected to the outer arm and a second bend (948) extending from the first bend toward the distal end of the inner arm.

5. The bracket of claim 4, wherein the first bend curves oppositely to the second bend.

6. The bracket of claim 4, wherein, the first bend is concave relative to the attachment portion and the second bend is convex relative to the attachment portion.

7. The bracket of claim 6, wherein, between the second bend and the distal end of the inner arm, the inner arm is concave relative to the attachment portion.

8. The bracket of claim 1 or of any of claims 2 to 7, wherein the inner arm is a first inner arm (740); and
wherein the support clip further includes a second inner arm (740) that integrally extends from the distal end of the outer arm, at least partly across the support channel; and
wherein the first and second inner arms are cantilevered from the outer arm.

9. The bracket of claim 8, wherein the support channel defines an axial direction (38) relative to the cable or conduit, and the support clip defines a lateral direction substantially parallel to the axial direction;
wherein the first inner arm extends along a first lateral side of the outer arm; and
wherein the second inner arm extends along a second lateral side of the outer arm, laterally opposite the first lateral side.

10. The bracket of claim 9, wherein the first and second inner arms define laterally outer edges of the support clip.

11. The bracket of any of the preceding claims, wherein the support clip further includes a finger (536) that extends into the support channel from an opposite side of the support channel as the inner arm and further defines the reduced support width of the support channel, to receive and resiliently support the cable or conduit of the second diameter.

12. The bracket of any of the preceding claims, wherein the attachment portion includes an intermediate arm (408) that integrally extends from the outer arm, an attachment interface (412) integrally extending from the intermediate arm, and an attachment arm (416) integrally extending from the attachment interface; and
wherein the intermediate arm, the attachment interface, and the attachment arm collectively define the attachment channel.

13. The bracket of claim 12, wherein the attachment portion includes engagement interfaces (482) integrally formed on one or more of the intermediate arm or the attachment arm, the engagement interfaces extending into the attachment channel to be aligned to resiliently secure the building structure within the attachment channel and being optionally or preferably integrally formed on an elongate engagement finger (496) that extends integrally from the attachment arm into the attachment channel.

14. A method of supporting cable or conduit, the method comprising:
attaching a bracket (900) to a building structure (902), with the building structure received into an attachment channel (954) of an attachment portion (904) of the bracket to support a support clip (920) of the bracket relative to the building structure; and
selectively inserting cable or conduit into a support channel defined within the support clip, to selectively:
support a first cable or conduit of a first diameter in the support channel, with the first cable or conduit resiliently secured by an outer arm (928) of the support channel; or
support a second cable or conduit of a second diameter in the support channel, the second diameter being smaller than the first diameter, with the second cable or conduit resiliently secured by an inner arm (940) that integrally extends from the outer arm into the support channel.

15. The method of claim 14, wherein inserting the first cable or conduit into the support channel to be secured by the outer arm deflects the inner arm through the outer arm to extend outside of the support channel.
